(19) Europäisches Patentamt / European Patent Office / Office européen des brevets

(11) **EP 4 080 601 A1**

(12) **EUROPEAN PATENT APPLICATION**
published in accordance with Art. 153(4) EPC

(43) Date of publication:
**26.10.2022  Bulletin 2022/43**

(21) Application number: **20902377.9**

(22) Date of filing: **17.12.2020**

(51) International Patent Classification (IPC):
**H01M 4/13** (2010.01)    **H01M 4/36** (2006.01)
**H01M 4/62** (2006.01)

(52) Cooperative Patent Classification (CPC):
**H01M 4/13; H01M 4/36; H01M 4/62;** Y02E 60/10

(86) International application number:
**PCT/JP2020/047237**

(87) International publication number:
**WO 2021/125286 (24.06.2021 Gazette 2021/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 17.12.2019  JP 2019227522
            17.12.2019  JP 2019227523
            16.03.2020  JP 2020045635
            27.10.2020  JP 2020179928

(71) Applicant: **APB Corporation
Tokyo 101-0041 (JP)**

(72) Inventors:
• **ISOMURA, Shogo
Kyoto-shi, Kyoto 605-0995 (JP)**

• **TSUDO, Yasuhiro
Kyoto-shi, Kyoto 605-0995 (JP)**
• **SHIMOMOTO, Yuya
Kyoto-shi, Kyoto 605-0995 (JP)**
• **KAWAKITA, Kenichi
Kyoto-shi, Kyoto 605-0995 (JP)**
• **MINAMI, Kazuya
Kyoto-shi, Kyoto 605-0995 (JP)**
• **KUDO, Shun
Kyoto-shi, Kyoto 605-0995 (JP)**
• **YOKOYAMA, Yuichiro
Kyoto-shi, Kyoto 605-0995 (JP)**
• **IMAISHI, Takahiro
Kyoto-shi, Kyoto 605-0995 (JP)**
• **HORIE, Hideaki
Tokyo 101-0041 (JP)**

(74) Representative: **Hoefer & Partner Patentanwälte
mbB
Pilgersheimer Straße 20
81543 München (DE)**

(54) **COATED POSITIVE ELECTRODE ACTIVE MATERIAL PARTICLES FOR LITHIUM ION BATTERIES, POSITIVE ELECTRODE FOR LITHIUM ION BATTERIES, AND METHOD FOR PRODUCING COATED POSITIVE ELECTRODE ACTIVE MATERIAL PARTICLES FOR LITHIUM ION BATTERIES**

(57)    Coated positive electrode active material particles for a lithium-ion battery includes positive electrode active material particles; and a coating layer that contains a polymer coating compound and a conductive additive and at least partially covers a surface of the positive electrode active material particles, wherein a coverage of the positive electrode active material particles with the coating layer as determined by X-ray photoelectron spectroscopy is 65% to 96%.

EP 4 080 601 A1

**Description**

Technical Field

The present invention relates to coated positive electrode active material particles for a lithium-ion battery, a positive electrode for a lithium-ion battery, and a production method of a coated positive electrode active material particles for a lithium-ion battery.

Background Art

In recent years, there has been an urgent need to reduce carbon dioxide emissions in order to protect the environment. In the automobile industry, there have been high expectations for the reduction in carbon dioxide emissions through the introduction of electric vehicles (EVs) and hybrid electric vehicles (HEVs), and the development of secondary cells for motor drive, which serves as a key to practical use of these vehicles, has been being conducted intensively. As the secondary batteries, attention has been paid to lithium-ion batteries, which are capable of achieving high energy density and high-power density, and an electrolyte solution and an active material have been improved to achieve higher performance.

In particular, as a positive electrode active material which makes it possible to produce batteries with high energy densities by suppressing irreversible reactions between an electrolyte solution and an active material, a composite positive electrode active material having a specific amount of polymer on the surface of the active material has been proposed (see Patent Literature 1).

Summary of Invention

Technical Problem

However, there has been a problem in the non-aqueous electrolyte secondary battery using the composite positive electrode active material disclosed in Patent Literature 1 in the charge/discharge characteristics of the lithium-ion battery, i.e., sufficient cycle characteristics may not be obtained.

In view of the foregoing, the present invention is made, and the purpose thereof is to provide coated positive electrode active material particles for a lithium-ion battery which can provide a lithium-ion battery with excellent cycle characteristics.

Solution to Problem

The consideration in order to accomplish the above purpose resultingly reaches the present invention.

Specifically, each one of coated positive electrode active material particles for lithium-ion batteries according to the present invention is obtained by coating at least a part of the surface of a positive electrode active material particle with a coating layer that contains a polymer compound for coating and a conductive assistant, wherein the coverage as determined by X-ray photoelectron spectroscopy is from 65% to 96%.

Advantageous Effects of Invention

Coated positive electrode active material particles for a lithium-ion battery according to the present invention makes it possible to obtain a lithium-ion battery with excellent cycle characteristics.

Brief Description of Drawings

[FIG. 1] FIG. 1 is a graph showing the relationship between storage days and internal resistance value of a lithium-ion battery obtained in Example 2.
[FIG. 2A] FIG. 2A is a cross-sectional view schematically showing an example of an electrode for a lithium-ion battery.
[FIG. 2B] FIG. 2B is an enlarged view of a broken line section in FIG. 2A.
[FIG. 3] FIG. 3 is a schematically showing an example of a support for use in a lithium-ion battery electrode.
[FIG. 4] FIG. 4 is a schematically showing an example of a support for use in a lithium-ion battery electrode.
[FIG. 5] FIG. 5 is a schematically showing an example of a support for use in a lithium-ion battery electrode.
[FIG. 6] FIG. 6 is a schematically showing an example of a support for use in a lithium-ion battery electrode.

[FIG. 7] FIG. 7 is a schematically showing an example of a support for use in a lithium-ion battery electrode.
[FIG. 8A] FIG. 8A is a perspective view schematically showing an example of a supply step.
[FIG. 8B] FIG. 8B is a perspective view schematically showing an example of a supply step.
[FIG. 9] FIG. 9 is a perspective view schematically showing an example of a compression step.
[FIG. 10] FIG. 10 is a perspective view schematically showing an example of a recovery step.
[FIG. 11] FIG. 11 is a perspective view schematically showing an example of a combination step.

Description of Embodiments

[Coated Positive Electrode Active Material Particles for a Lithium-Ion Battery]

Coated positive electrode active material particles for a lithium-ion battery of the present invention (hereinafter, also simply referred to as the "coated positive electrode active material particles") (P) is coated positive electrode active material particles for a lithium-ion battery each having a surface at least partially coated with a coating layer containing a polymer compound and a conductive auxiliary agent.
In the coated positive electrode active material particles of the present invention, the coverage as determined by X-ray photoelectron spectroscopy (XPS) is from 65% to 96%.
The coverage is preferably 70 to 93%, and more preferably 75 to 90%, from the viewpoint of the cycle characteristics.
When measuring the coverage, XPS measurement of the coated positive electrode active material particles (P) is carried out using "PHI5800 ESCA SYSTEM" manufactured by ULVAC-PHI."
For example, in the case where the positive electrode active material particles are $LiNi_{0.86}Co_{0.06}Al_{0.02}Mn_{0.06}O_2$, the spectral species is Is orbital for C (carbon), 2p orbital for Co, 2p orbital for Al, and 2p orbital for Mn and 2p orbital for Ni, and the coverage is calculated by the following formula from the integrated value of each spectrum.

$$\text{Coverage}(\%)=\ulcorner C \lrcorner \times 100/(\ulcorner C \lrcorner + \ulcorner Ni \lrcorner + \ulcorner Co \lrcorner + \ulcorner Al \lrcorner + \ulcorner Mn \lrcorner)$$

The ratio of the total weight of the polymer compound and the conductive auxiliary agent to the weight of the positive electrode for a lithium-ion battery active material particles are preferably 2 to 25% by weight.
The ratio of the weight of the polymer compound to the weight of the coated positive electrode active material particles for a lithium-ion battery is preferably 0.1 to 11% by weight and even more preferably 1 to 5% by weight. The ratio of the weight of the conductive auxiliary agent to the weight of the coated positive electrode active material particles for a lithium-ion battery is preferably 2 to 14% by weight and even more preferably 2 to 10% by weight.
The conductivity of the coating layer is preferably 0.001 to 10 mS/cm, more preferably 0.01 to 5 mS/cm.
The conductivity of the coating layer can be determined by the four-terminal method.
It is preferable that the conductivity of the coating layer is 0.001 mS/cm or more because the internal resistance of the lithium-ion battery does not become too high.

<Positive Electrode Active Material Particles>

As the positive electrode active material particles constituting the coated positive electrode active material particles for a lithium-ion battery (P) of the present invention, conventionally known ones can be preferably used, and a compound can be used that lithium ions can be inserted and removed by applying a certain potential and lithium ions can be inserted and removed at a higher potential than the negative electrode active material used for the counter electrode.
Examples of the positive electrode active material particle include a composite oxide of lithium and a transition metal {a composite oxide having one kind of transition metal ($LiCoO_2$, $LiNiO_2$, $LiAlMnO_4$, $LiMnO_2$, $LiMn_2O_4$, or the like), a composite oxide having two kinds of transition metal elements (for example, $LiFeMnO_4$, $LiNi_{1-x}Co_xO_2$, $LiMn_{1-y}Co_yO_2$, $LiNi_{1/3}Co_{1/3}Al_{1/3}O_2$, $LiNi_{0.8}Co_{0.15}Al_{0.05}O_2$, $LiNi_{0.77}Co_{0.2}Al_{0.03}O_2$, $LiNi_{0.83}Co_{0.14}Al_{0.03}O_2$ and $LiNi_{0.87}Co_{0.08}Al_{0.05}O_2$), a composite oxide having three or more kinds of transition metal elements [for example, $LiA_aB_bC_c ... N_nO_2$ (where A, B, C and N are transition metal elements different each other and satisfy a+b+c+ ... +n=1, e.g., $LiNi_{1/3}Co_{1/3}Mn_{1/3}O_2$, $LiNi_{0.9}Co_{0.04}Al_{0.02}Mn_{0.04}O_2$ and $LiNi_{0.86}Co_{0.06}Al_{0.02}Mn_{0.06}O_2$)] }, a lithium-containing transition metal phosphate (for example, $LiFePO_4$, $LiCoPO_4$, $LiMnPO_4$, or $LiNiPO_4$), a transition metal oxide (for example, $MnO_2$ and $V2O_5$), a transition metal sulfide (for example, $MoS_2$ or $TiS_2$), and a conductive polymer (for example, polyaniline, polypyrrole, polythiophene, polyacetylene, poly-p-phenylene, or polyvinyl carbazole). Two or more thereof may be used in combination. Incidentally, the lithium-containing transition metal phosphate may be one in which a part of the transition metal site is replaced with another transition metal.

The volume average particle diameter of the positive electrode active material particles is preferably 0.01 µm to 100 µm, more preferably 0.1 µm to 35 µm, and even more preferably 2 µm to 30 µm from the viewpoint of electric properties of the battery.

In the present specification, the volume average particle diameter of the positive electrode active material particles for a lithium-ion battery means the particle diameter at an integrated value of 50% (Dv50) in a particle size distribution determined by the microtrack method (laser diffraction scattering method). The microtrack method is a method of determining the particle size distribution while using the scattered light obtained by irradiating particles with laser light. Incidentally, for the measurement of the volume average particle diameter, a microtrack manufactured by NIKKISO CO., LTD., and the like. can be used.

<Polymer Compound for Coating>

A polymer compound for coating constituting the coating layer [hereinafter may be abbreviated to "polymer compound"] preferably a polymer of a monomer composition containing an ester compound (a1-11) of a C1-C12 monohydric aliphatic alcohol and (meth) acrylic acid (described below) and an ionic monomer (a1-12).

As used herein, (meth) acrylic acid means methacrylic acid or acrylic acid.

The acid value of the polymer compound in the present invention (unit: mgKOH/g) is preferably 5~200, even more preferably 7~100, and particularly preferably10~50 from the viewpoint of cycle characteristics of the lithium-ion battery described below.

The acid value described above can be appropriately adjusted depending on the type and weight ratio of each monomer constituting the polymer compound. For example, if the weight of the ester compound (a1-11) is large with respect to all the monomers constituting the polymer compound, the acid value is small.

The acid value described above is measured by the method of JIS K 0070-1992.

<Ester Compound (a1-11)>

Ester compound (a1-11) in the present invention is an ester compound of a C1-C12 monohydric aliphatic alcohol and (meth) acrylic acid. Examples of the C1-C12 monovalent aliphatic alcohol include monovalent branched or linear aliphatic alcohols, and specific examples thereof include methanol, ethanol, propanol (n-propanol and iso-propanol), butyl alcohol (n-butyl alcohol, sec-butyl alcohol, and tert-butyl alcohol), pentyl alcohol (n-pentyl alcohol, 2-pentyl alcohol, neopentyl alcohol, and the like), hexyl alcohol (1-hexanol, 2-hexanol, 3-hexanol, and the like), heptyl alcohol (n-heptyl alcohol, 1-methylhexyl alcohol, 2-methylhexyl alcohol, and the like), octyl alcohol (n-octyl alcohol, 1-methylheptanol, 1-ethylhexanol, 2-methylheptanol, 2-ethylhexanol, and the like), nonyl alcohol (n-nonyl alcohol, 1-methyloctanol, 1-ethylheptanol, 1-propylhexanol, 2-ethylheptyl alcohol, and the like), decyl alcohol (n-decyl alcohol, 1-methylnonyl alcohol, 2-methylnonyl alcohol, 2-ethyloctyl alcohol, and the like), undecyl alcohol (n-undecyl alcohol, 1-methyldecyl alcohol, 2-methyldecyl alcohol, 2-ethylnonyl alcohol, and the like), and lauryl alcohol (n-lauryl alcohol, 1-methylundecyl alcohol, 2-methylundecyl alcohol, 2-ethyldecyl alcohol, 2-butylhexyl alcohol, and the like).

Among the ester compounds (a1-11), methyl (meth)acrylate, propyl (meth)acrylate, butyl (meth)acrylate, 2-Methylhexyl (meth) acrylate, 2-ethylhexyl (meth) acrylate, dodecyl (meth) acrylate and a combination of these are preferable from the viewpoint of the cycle characteristics; 2-ethylhexyl methacrylate and dodecyl methacrylate are more preferable; and dodecyl methacrylate is further preferable. It is particularly preferable that the dodecyl methacrylate is 30% by weight or more (more preferably 60% by weight or more) based on the weight of the ester compound (a1-11).

<Anionic Monomer (A1-12)>

An anionic monomer (a1-12) is a monomer having a polymerizable group having a radical polymerizability and an anionic group. Preferred examples of the radically polymerizable group include a vinyl group, an allyl group, a styrenyl group and a (meth) acryloyl group, and preferred examples of anionic groups include a phosphonic acid group, a sulfonic acid group and a carboxyl group.

Preferred examples of anionic monomers (a1-12) include at least one selected from the group consisting of a C3-C9 radically polymerizable unsaturated carboxylic acid, a C2-C8 radically polymerizable unsaturated sulfonic acid, and a C2-C9 radically polymerizable unsaturated phosphonic acids.

Examples of the C3-C9 radically polymerizable unsaturated carboxylic acid include a C3-C9 radically polymerizable unsaturated aliphatic monocarboxylic acid and a C9 radically polymerizable unsaturated aromatic monocarboxylic acid.

Examples of the C3-C9 radically polymerizable unsaturated aliphatic monocarboxylic acid include (meth) acrylic acid, butanoic acid (including substituted butanoic acid such as 2-methylbutanoic acid and 3-methylbutanoic acid), pentenoic acid (including substituted pentenoic acid such as 2-methylpentenoic acid and 3-methylpentenoic acid), hexenoic acid (including substituted hexenoic acid such as 2-methylhexenoic acid and 3-methylhexenoic acid), heptenoic acid (including substituted heptenoic acid such as 2-methylheptenoic acid and 3-methylheptenoic acid) and octenoic acid (including substituted octenoic acid such as 2-methyloctenoic acid and 3-methyloctenoic acid). Examples of the C9 radically polymerizable unsaturated aromatic monocarboxylic acid include 3-Phenylpropene acid and vinyl benzoic acid.

Examples of the C2-C8 radically polymerizable unsaturated sulfonic acid include a C2-C8 radical-polymerizable unsaturated aliphatic monosulfonic acid and a C8 radical-polymerizable unsaturated aromatic monosulfonic acid.

Examples of the C2-C8 radical-polymerizable unsaturated aliphatic monosulfonic acid include vinyl sulfonic acid (including substituted vinyl sulfonic acid such as 1-methyl vinyl sulfonic acid and 2-methyl vinyl sulfonic acid), allyl sulfonic acid (substituted allyl sulfonic acid such as 1-methyl allyl sulfonic acid and 2-methyl allyl sulfonic acid) butenesulfonic acid (including substituted butenesulfonic acid such as 1-methylbutenesulfonic acid and 2-methylbutenesulfonic acid), pentensulfonic acid (including substituted pentensulfonic acid such as 1-methylpentenesulfonic acid and 2-methylpentenesulfonic acid), hexen sulfonic acid (including substituted hexene sulfonic acid such as 1-methyl hexene sulfonic acid and 2-methyl hexene sulfonic acid) and heptene sulfonic acid (including substituted heptene sulfonic acid such as 1-methyl heptene sulfonic acid and 2-methyl hepten sulfonic acid). Examples of the C-8 radically polymerizable unsaturated aromatic monosulfonic acid include styrene sulfonic acid.

Examples of the C2-C9 radical polymerizable unsaturated phosphon include vinylphosphonic acid, allylphosphonic acid, vinylbenzylphosphonic acid, 1- or 2-phenylethenylphosphonic acid, (meth) acrylamidealkylphosphonic acid, acrylamidealkyldiphosphonic acid, phosphonomethylated vinylamine, (meth) acrylicphosphonic acid, and the like.

One kind of these anionic monomers (a1-12) may be used alone, or two or more kinds thereof may be used in combination.

Among the anionic monomers (a1-12) above, a C3-C9 radically polymerizable unsaturated carboxylic acid is preferable, and (meth) acrylic acid is more preferable, from the viewpoint of cycle characteristics.

It is particularly preferable that (meth) acrylic acid is 50% by weight or more (more preferably 70% by weight or more) based on the weight of the anionic monomers (a1-12).

The content of ester compound (a1-11) contained in the above monomer composition is preferably 70 to 99 % by weight, even more preferably 80 to 98 % by weight, particularly preferably 90 to 97 % by weight based on the total weight of the ester compound (a1-11) and the anionic monomer (a1-12) from the viewpoint of the adhesive property to active material.

The content of anionic compound (a1-12) contained in the above monomer composition is preferably 1 to 30 % by weight, even more preferably 2 to 20 % by weight, particularly preferably 3 to 10 % by weight based on the total weight of the ester compound (a1-11) and the anionic monomer (a1-12) from the viewpoint of the ion conductivity.

<Salt of Anionic Monomer (a1-13)>

The monomer composition of the polymer compound for coating described above may further contain a salt of anionic monomer (a1-13).

It is preferable to contain the salt of the anionic monomer (a1-13) because the internal resistance can be reduced, thereby improving the cycle characteristics.

Examples of the anion of anionic monomer that constitutes salt of anionic monomer (a1-13) include an anion of the anionic monomer that is same as the one exemplified in the above anionic monomer (a1-12), preferably at least one anion selected from the group consisting of vinyl sulfonic acid anion, allyl sulfonic acid anion, styrene sulfonic acid anion and (meth) acrylic acid anion.

Examples of the cation of anionic monomer that constitutes salt of anionic monomer (a1-13) include a monovalent inorganic cation, preferably alkali metal cations and ammonium ions, more preferably lithium ion, sodium ion, potassium ions and ammonium ions, and even more preferably lithium ion.

The salt of the anionic monomer (a1-13) may be used alone or in combination of two or more.

One kind of salt of anionic monomer (a1-13) may be used. In the case where the salt of anionic monomer (a1-13) has a plurality of anions, the cation is preferably at least one cation selected from the group consisting of lithium ion, sodium ion, potassium ion and ammonium ion.

In the polymer compound for coating, in the case where the monomer composition described above contains a salt of anionic monomer (a1-13), the content of salt of anionic monomer (a1-13) contained in the monomer composition is preferably 0.1 to 10 by weight, and even more preferably 0.5 to 5 % by weight based on the total weight of the ester compound (a1-11) and the anionic monomer (a1-12) from the viewpoint of the conductivity and adhesion property.

The weight average molecular weight (Mw) of the polymer compound for coating is preferably 20,000 to 300,000, and even more preferably 40,000 to 200,000 from the viewpoint of the adhesion property to the active material and the balance of the coverage.

The number average molecular weight (Mw) and the number average molecular weight (Mn) are measured by gel permeation chromatography (hereinafter, abbreviated as GPC) measured under the following conditions.

<GPC Measurement Conditions>

Device: Alliance GPC V2000 (Waters Corporation)
Solvent: Ortho-dichlorobenzene
Standard substance: Polystyrene
Sample concentration: 3 mg/ml
Column solid phase: PLgel 10 $\mu$m, MIXED-B, two columns connected in series
(Polymer Laboratories Limited)
Column temperature: 135° C

The monomer composition described above may contain the ester compound (a1-11), the anionic monomer (a1-12) and the salt of anionic monomer (a1-13), as well as at least one out of a copolymerizable vinyl monomer (c1) containing no active hydrogen (hereinafter referred to as a copolymerizable vinyl monomer (c1)] and the crosslinking agent (d1).

Examples of the copolymerizable vinyl monomer (c1) include (c1-1) to (c1-5) listed below.

(c1-1) Ester compound formed of a C13-C20 branched or linear aliphatic monool, a C5-C20 alicyclic monool, or a C7-C20 aromatic aliphatic monool and (meth) acrylic acid.

Examples of the monool described above include (i) C13-C20 branched or linear aliphatic monools (tridecyl alcohol, tetradecyl alcohol, pentadecyl alcohol, cetyl alcohol, heptadecyl alcohol, stearyl alcohol, isostearyl alcohol, nonadecil alcohol and arachidyl alcohol and the like.), (ii) C5-C20 aicyclic monools (cyclohexyl alcohol, and the like.), (iii) C7-C20 aromatic aliphatic monools (benzyl alcohol, and the like.), and a mixture of those two or more kinds of them.

(c1-2) Poly (n = 2 to 30) oxyalkylene (C2-C4) alkyl (C1-C18) ether (meth) acrylate [ester compound of ethylene oxide of methanol (hereinafter abbreviated as EO) 10 mol adduct and (meth) acrylic acid, and ester compound of methanol propylene oxide (hereinafter abbreviated as PO) 10 mol adduct and (meth) acrylic acid, and the like.].

(c1-3) Nitrogen-containing vinyl compound
(c1-3-1) Amide group-containing vinyl compound

(i) C3-C30 (meth) acrylamide compounds, such as N, N-dialkyl (C1-C6) or dialalkyl (C7-C15) (meth) acrylamide (N, N-dimethylacrylamide, N, N-dibenzylacrylamide, and the like.) and diacetone acrylamide.
(ii) C4-C20 amide group-containing vinyl compounds except for the above-mentioned (meth) acrylamide compounds, for example, N-methyl-N-vinylacetamide, cyclic amide [a C6-C13 pyrrolidone compound (N-vinylpyrrolidone) and the like].

(c1-3-2) (Meta) acrylate compound

(i) Dialkyl (C1-C4) aminoalkyl (C1-C4) (meth) acrylate [N, N-dimethylaminoethyl (meth) acrylate, N, N-diethylaminoethyl (meth) acrylate, t-Butylaminoethyl (meth) acrylate, and morpholinoethyl (meth) acrylate, and the like.].

(c1-3-3) Heterocycle-containing vinyl compound
C7-C14 pyridine compounds (2- or 4-vinylpyridine, and the like.), C5-C12 imidazole compounds (N-vinylimidazole, and the like.), C6-C13 pyrrole compounds (N-vinylpyrrole, and the like.) and C6-C13 pyrrolidone compounds (N-vinyl-2-pyrrolidone, and the like.).
(c1-3-4) Nitrile group-containing vinyl compound
C3-C15 nitrile group-containing vinyl compounds [(meth) acrylonitrile, cyanostyrene and alkyl (C1-C4) cyanoacrylate, and the like.].
(c1-3-5) Other vinyl compounds
C8-C16 nitro group-containing vinyl compounds (nitrostyrene, and the like.).
(c1-4) Vinyl hydrocarbon
(c1-4-1) Aliphatic vinyl hydrocarbons
C2-C18 or more olefins (ethylene, propylene, butene, isobutylene, pentene, heptene, diisobutylene, octene, dodecene, octadecene, and the like.), C4-C10 or more dienes (butadiene, isoprene, 1, 4-pentadiene, 1,5-hexadiene and 1,7-octadiene, and the like.).
(c1-4-2) Alicyclic vinyl hydrocarbon

C4-C18 or more cyclic unsaturated compounds [cycloalkene (cyclohexene, vinylcyclohexene, indene, and the like.), cycloalkadiene (cyclopentadiene, and the like.), bicycloalkene (ethylidene bicycloheptene, and the like.), bicycloalkadiene (dicyclopentadiene, and the like.) and terpenes (pinene, limonene, and the like.)], and the like.

(c1-4-3) Aromatic vinyl hydrocarbon

C8-C20 or more aromatic unsaturated compounds and the derivatives thereof (styrene, $\alpha$-methylstyrene, vinyltol-uene, 2,4-dimethylstyrene, ethylstyrene, isopropylstyrene, butylstyrene, phenylstyrene, cyclohexylstyrene and benzyl styrene and the like.) and the like.

(c1-5) Vinyl group-containing ester compound, vinyl group-containing ether compound, vinyl ketone and unsaturated dicarboxylic acid diester

(c1-5-1) Vinyl group-containing ester compound [alkenyl ester of a C4-C15 aliphatic carboxylic acid (mono- or dicarboxylic acids) (vinyl acetate, vinyl propionate, vinyl butyrate, diallyl adipate, isopropenyl acetate, methoxyvinyl acetate, and the like.)] and the like.

Aromatic vinyl esters [alkenyl ester of a C9-C20 aromatic carboxylic acid (mono- or dicarboxylic acid) (vinyl benzoate, methyl 4-vinyl benzoate, and the like.) and aromatic ring-containing ester of aliphatic carboxylic acid (acetoxystyrene, and the like.)].

(c1-5-2) Vinyl group-containing ether compound

Aliphatic vinyl ethers [a C3-C15 vinyl alkyl (C1-C10) ether (vinyl methyl ether, vinyl butyl ether, vinyl 2-ethylhexyl ether, and the like.), vinyl alkoxy (C1-C6) Alkyl (C1-C4) ether (vinyl-2-methoxyethyl ether, methoxybutadiene, 3,4-dihydro-1,2-pyran, 2-butoxy-2'-vinyloxydiethyl ether and vinyl-2-ethyl mercaptoethyl ether, and the like.), poly (2-4) (meth) allyloxyalkane (C2-C6) (dialyloxyetane, trialiloxietan, tetraaryloxybutane and tetrametha alyloxy ether, and the like.), and the like.].

C8-C20 aromatic vinyl ethers (vinyl phenyl ether, phenoxystyrene, and the like.).

(c1-5-3) Vinyl ketone

C4-C25 aliphatic vinyl ketones (vinyl methyl ketone, vinyl ethyl ketone, and the like.),

C9-C21 aromatic vinyl ketones (vinyl phenyl ketone, and the like.), and the like.

(c1-5-4) Unsaturated dicarboxylic acid diester

C4-C34 unsaturated dicarboxylic acid diesters [dialkyl fumarate (two alkyl groups are C1-C22 linear, branched or alicyclic groups) and dialkylmalate (two alkyl groups are C1-C22 linear, branched or alicyclic groups), and the like.].

In the case where the monomer composition described above contains a copolymerizable vinyl monomer (c1), the content of the copolymerizable vinyl monomer (c1) is preferably 10 to 50% by weight based on the total weight of the ester compound (a1-11) and the anionic monomer (a1-12).

<Crosslinking agent (d1)>

Examples of the cross-linking agent (d1) include a monomer having two vinyl groups (d1-2) and a monomer having three or more vinyl groups (d1-3).

Examples of the monomer (d1-2) include C2-C12 di (meth) acrylates of diol, specifically, ethylene glycol di (meth) acrylate, 1,4-butanediol di (meth) acrylate, 1,6-hexanediol di (meth) acrylate and dodecanediol di (meth) acrylate.

Examples of the monomer (d1-3) include trimethylolpropane tri (meth) acrylate and pentaerythritol tetra (meth) acrylate.

Among the above-mentioned crosslinking agents (d1), (d1-2) is preferable from the viewpoint of molecular weight adjustment and adhesion property.

Further, in the case where the monomer composition described above contains a crosslinking agent (d1), the content thereof is preferably 0.05 to 2.5 by weight, and even more preferably 0.1 to 1 % by weight based on the total weight of the monomer constituting the polymer compound for coating from the viewpoint of the molecular weight adjustment and adhesion property.

The glass transition point of the polymer compound for coating [hereinafter abbreviated as Tg, measuring method: DSC (scanning differential thermal analysis) method] is preferably 50 to 200 °C, more preferably 70 to 180 °C, particularly preferably 80 to 150 °C, from the viewpoint of heat resistance of the battery. The temperature can be appropriately adjusted depending on the type and weight of each monomer.

The polymer compound for coating can be obtained by polymerizing the above-mentioned monomer composition, and a known polymerization method (bulk polymerization, solution polymerization, emulsion polymerization, suspension polymerization, and the like.) is used as the polymerization method.

In the polymerization, known polymerization initiators {azo-based initiators [2,2'-azobis(2-methylpropionitrile), 2,2'-azobis(2,4-dimethylvaleronitrile) and 2,2'-azobis (2-methylbutyronitrile), and the like.], a peroxide-based initiator (benzoyl peroxide, di-t-butyl peroxide, lauryl peroxide, and the like.), and the like.} can be used. The amount of the polymerization initiator used is preferably 0.01 to 5% by weight, more preferably 0.05 to 2% by weight, based on the total weight of the monomer components contained in the monomer composition.

Examples of the solvent used in the case of solution polymerization include an ester solvent [preferably C2-C8 ester compounds (such as ethyl acetate and butyl acetate)], and an alcohol [preferably C1-C8 aliphatic alcohols (such as methanol, ethanol, isopropanol and octanol)], C5-C8 hydrocarbons with linear, branched or cyclic structures (such as pentane, hexane, heptane, octane, cyclohexane, toluene and xylene), an amide solvent [such as N,N-dimethylformamide (hereinafter abbreviated as DMF) and dimethylacetamide] and a ketone solvent [preferably a C3-C9 ketone compound (such as methyl ethyl ketone)].

The amount of the solvent used is, for example, 50 to 200% by weight based on the total weight of the monomer components contained in the monomer composition, and the concentration of the monomer composition in the reaction solution is, for example, 30 to 70% by weight.

The temperature inside the system in the polymerization reaction is -5 to 150°C and preferably 30 to 120°C, and the reaction time is 0.1 to 50 hours and preferably 2 to 24 hours. The end point of the reaction is the point in which the amount of the unreacted monomers being 5% by weight or less and preferably 1% by weight or less based on the total amount of the monomer components contained in the monomer composition. The amount of unreacted monomer can be confirmed by a known method for quantifying the monomer content such as gas chromatography.

<Conductive Auxiliary Agent>

The conductive auxiliary agent contained in the coating layer is selected from materials having conductivity.

Specific examples thereof include metal [nickel, aluminum, stainless steel (SUS), silver, copper, titanium, and the like] and carbon [graphite and carbon black (acetylene black, Ketjen black, furnace black, channel black, thermal lamp black, and the like)], and the like.

One kind of these conductive auxiliary agents may be used alone, or two or more kinds thereof may be used in combination, but not limited to these. Moreover, an alloy or metal oxide thereof may be used.

From the viewpoint of electrical stability, aluminum, stainless steel, carbon, silver, copper, titanium, or a mixture thereof is preferable, silver, aluminum, stainless steel, or carbon is more preferable, and carbon is still more preferable.

Further, these conductive auxiliary agents may be those obtained by coating a conductive material (a metallic conductive material among materials of the conductive auxiliary agent described above) around a particle-based ceramic material or a resin material with plating or the like.

The average particle size of the conductive auxiliary agent is not particularly limited; however, it is preferably 0.01 to 10 $\mu$m, more preferably 0.02 to 5 $\mu$m, and still more preferably 0.03 to 1 $\mu$m, from the viewpoint of the electrical characteristics of the battery.

As used herein, the "particle size" of the conductive auxiliary agent means the maximum distance L among the distances between any two points on the contour line of the conductive auxiliary agent. As the value of the "average particle size" of the conductive auxiliary agent, the average value of the particle sizes of the particles observed in several to several tens of visual fields using an observation means such as a scanning electron microscope (SEM) or a transmission electron microscope (TEM) shall be adopted.

The shape (the form) of the conductive filler is not limited to the particle form, may be a form other than the particle form, and may be a form practically applied as a so-called filler-based conductive auxiliary agent such as carbon nanofibers, carbon nanotubes, and the like.

The conductive auxiliary agent may be a conductive fiber of which the shape is fibrous.

Examples of the conductive fiber include a carbon fiber such as a polyacrylonitrile (PAN) based carbon fibers or a pitch-based carbon fiber, a conductive fiber obtained by uniformly dispersing a metal having good conductivity or graphite in the synthetic fiber, a metal fiber obtained by making a metal such as stainless steel into a fiber, a conductive fiber obtained by coating a surface of an organic fiber with a metal, and a conductive fiber obtained by coating a surface of an organic fiber with a resin containing a conductive substance, polypropylene resin in which graphene is kneaded, and the like. Among these conductive fibers, the carbon fiber and the polypropylene resin in which graphene is kneaded are preferable.

In a case where the conductive auxiliary agent is a conductive fiber, the average fiber diameter thereof is preferably 0.1 to 20 $\mu$m from the viewpoint of conductivity, mechanical strength and dispersibility.

The average particle size of the conductive auxiliary agent is not particularly limited; however, it is preferably on the order of 0.01 to 10 $\mu$m from the viewpoint of the electrical characteristics of the battery.

As used herein, the "particle size of the conductive auxiliary agent" means the maximum distance L among the distances between any two points on the contour line of the conductive auxiliary agent. As the value of the "average particle size", the average value of the particle sizes of the particles observed in several to several tens of visual fields using an observation means such as a scanning electron microscope (SEM) or a transmission electron microscope (TEM) shall be adopted.

The ratio of the polymer compound constituting the coating layer to the conductive auxiliary agent is not particularly limited, but from the viewpoint of the internal resistance of the battery and the like, the weight ratio of the polymer compound constituting the coating layer (resin solid content weight): the conductive auxiliary agent is preferably 1: 0.01 to 1:50, and more preferably 1: 0.2 to 1: 3.0.

The coated positive electrode active material particles for a lithium-ion battery(P) of the present invention can be produced, for example, by the following production method.

(1) A polymer compound, the conductive auxiliary agent and the positive electrode active material particles are mixed.
(2) After preparing a coating material by mixing the polymer compound and the conductive auxiliary agent, the coating material and the positive electrode active material particles are mixed.
(3) After mixing the solution containing the polymer compound and the solvent and the positive electrode active material particles, the conductive auxiliary agent is then mixed, and the solvent is distilled off if necessary.
(4) After mixing the mixed solution containing the polymer compound, the conductive auxiliary agent and the solvent, and the positive electrode active material particles, the solvent is distilled off if necessary.

It is preferable to mix the positive electrode active material particles, the polymer compound, the conductive auxiliary agent, and the solvent in order to keep the coverage in the present invention within a preferable range. Therefore, among (1) to (4) above, (3) or (4) is preferable, and (3) is more preferable, from the viewpoint of setting the coverage within a preferable range.

In the production method (3) or (4) above, examples of the solvent include N, N-dimethylformamide (DMF), toluene, xylene and acetone.

Of these, toluene, xylene and acetone are preferable, and toluene and xylene are more preferable from the viewpoint of the cycle characteristics.

Further, in the (3) or (4) above, the weight ratio of the polymer compound to the solvent [(polymer compound)/(solvent)] is preferably 10/90 to 40/60, more preferably 20/80 to 35/65, and particularly preferably 25/75 to 30/70 from the viewpoint of setting the coverage within a preferable range.

The following method can be used, for example, to keep the coverage in the present invention within a preferable range,

(1) Use preferable positive electrode active material particles, polymer compound, and conductive auxiliary agent, and set the weight ratios thereof to be preferable.
(2) In the production methods (1) to (4) above, employ a preferable production method.
(3) In the production methods (3) and (4) above, control the interface state between the positive electrode active material particles and the polymer compound under the condition where the absolute value ($\Delta E$, unit: mN/m) of the difference between the surface free energy of the positive electrode active material particles and the surface free energy of the solvent is preferably 10 to 30, even more preferably 15 to 25.

In the present invention, the surface free energy of the positive electrode active material particles is the value that is obtained by measuring the contact angle between the known solvent and the powder sample by means of the capillary penetration method using a powder wet permeation analyzer ["PW-500", available from Kyowa Interface Science Co., Ltd.] to be calculated by the Owns-Wendt method ("Journal of Applied Polymer Science, August, 1969, Volume 13, Issue 8, P1741-1747") and the method described in "Surface, 2005, Volume 4, P313-318".

Further, the surface free energy and the surface tension are quantities that have equivalent dimensions as physical quantities, and when expressed in the same unit system, the numerical values are also the same. The surface free energy of the solvent (= surface tension of the solvent) in the present invention is a value calculated by the pendant drop method using a pendant drop type surface tension measuring device ["PWD", available from Kyowa Interface Science Co., Ltd.].

Upon using the coated positive electrode active material particles for a lithium-ion battery of the present invention as a positive electrode, after applying a dispersion liquid that is a slurry in which the coated positive electrode active material particles for a lithium-ion battery and the conductive material are dispersed at a concentration of 30 to 60% by weight based on the weight of the dispersion liquid to a current collector by a coating device such as a bar coater, a dispersion medium may be removed by drying if water or a solvent is used as a dispersion medium, or absorbing an excess electrolyte solution by an absorber such as a sponge or being sucked through a mesh if the electrolyte solution is used as the dispersion medium, and pressing by a press machine if necessary.

While a known electrode binder [polyvinylidene fluoride (PVdF), and the like.] contained in a known positive electrode of a lithium-ion battery may be added to the dispersion liquid, if necessary, an electrode binder is preferably not added. In a conventionally known positive electrode for a lithium-ion battery that does not use coated positive electrode active material particles as positive electrode active material particles, it is necessary to maintain the conductive path by fixing the positive electrode active material particles inside the positive electrode with an electrode binder. However, when the coated positive electrode active material particles for a lithium-ion battery of the present invention is used, the conductive path can be maintained without fixing the positive electrode active material particles inside the positive electrode thanks to the action of the coating layer, so that it is not necessary to add the electrode binder. No electrode binder added prevents the positive electrode active material particles from being fixed in the positive electrode, whereby the alleviation ability of the positive electrode active material particles against the volume change is further improved.

In addition, the conductive material used for producing the electrode is not the conductive auxiliary agent contained in the coating layer, but exists outside the coating layer that the coated positive electrode active material particles have, and has the function of improving the electron conductivity from the surface of the coated positive electrode active material particles in the positive electrode active material layer.

Among the dispersion media, examples of water include ion-exchanged water and ultrapure water.

Among the dispersion media, as an electrolyte solution, the same electrolyte solution (described below) for use in preparing a lithium-ion battery using a positive electrode containing the coated positive electrode active material particles for a lithium-ion battery of the present invention can be used.

Among the dispersion media, as a solvent, the same non-water solvent that constitutes the electrolyte solution for use in preparing a lithium-ion battery using a positive electrode containing the coated positive electrode active material particles for a lithium-ion battery of the present invention can be used.

Examples of the current collector include a resin current collector consist of metal foil such as copper, aluminum, titanium, stainless steel and nickel, and conductive polymer (disclosed in Japanese Unexamined Patent Application, First Publication No. 2012-150905), a conductive carbon sheet, a conductive glass sheet, and the like.

Examples of the electrode binder include starch, polyvinylidene fluoride, polyvinyl alcohol, carboxymethyl cellulose, polyvinylpyrrolidone, tetrafluoroethylene, styrene-butadiene rubber, polyethylene and polypropylene, etc.

As the conductive material used together with the coated positive electrode active material particles for a lithium-ion battery at the time of producing the electrode, the same conductive auxiliary agent contained in the coating layer can be used.

When preparing a lithium-ion battery using a positive electrode containing the coated positive electrode active material particles for a lithium-ion battery of the present invention, it is possible to manufacture the lithium-ion battery, for example, by a method of combining the electrodes to be the counter electrodes to be accommodated in a cell container together with a separator, injecting a electrolyte solution thereto, and sealing the cell container.

Further, it is possible to obtain the lithium-ion battery by forming a positive electrode on one surface of the current collector and forming a negative electrode on the other surface, thereby producing a bipolar electrode, laminating the bipolar electrode with a separator, accommodating them in a cell container, injecting an electrolyte solution thereto, and sealing the cell container.

Examples of the separator include known separators for a lithium-ion battery, such as a microporous film consisting of polyethylene or polypropylene, a multilayer film of a porous polyethylene film and polypropylene, a nonwoven fabric consisting of a synthetic fiber (a polyester fiber, an aramid fiber, or the like) or a glass fiber, or the like and those above of which the surface is attached with ceramic fine particles such as silica, alumina, or titania.

As the non-aqueous electrolytic solution that is injected into the cell container, a known non-aqueous electrolytic solution containing an electrolyte and a non-aqueous solvent, which is used in the production of a lithium-ion battery, can be used.

As the electrolyte, an electrolyte that is used in a known electrolytic solution can be used. Examples thereof include lithium salts of inorganic acids ($LiPF_6$, $LiBF_4$, $LiSbF_6$, $LiAsF_6$, and $LiClO_4$, and the like) and lithium salts of organic acids {$LiN(CF_3SO_2)_2$, $LiN(C_2F_5SO_2)_2$, $LiC(CF_3SO_2)_3$, and the like}. Among these, $LiPF_6$ is preferable from the viewpoints of battery output and charging and discharging cycle characteristics.

As the non-aqueous solvent, a non-aqueous solvent that is used in the known electrolytic solution can be used, and for example, a lactone compound, a cyclic or chain-like carbonic acid ester, a chain-like carboxylic acid ester, a cyclic or chain-like ether, a phosphoric acid ester, a nitrile compound, an amide compound, a sulfone, or a sulfolane, or a mixture thereof can be used.

Examples of the lactone compound can include a 5-membered ring lactone compound (y-butyrolactone, $\gamma$-valerolactone, or the like) and a 6-membered ring lactone compound ($\delta$-valerolactone or the like).

Examples of the cyclic carbonic acid ester include propylene carbonate, ethylene carbonate, and butylene carbonate.

Examples of the chain-like carbonic acid ester include dimethyl carbonate, methyl ethyl carbonate, diethyl carbonate, methyl-n-propyl carbonate, ethyl-n-propyl carbonate, and di-n-propyl carbonate.

Examples of the chain-like carboxylic acid ester include methyl acetate, ethyl acetate, propyl acetate, and methyl propionate.

Examples of the cyclic ether include tetrahydrofuran, tetrahydropyran, 1,3-dioxolane, and 1,4-dioxane.

Examples of the chain-like ether include dimethoxymethane and 1,2-dimethoxyethane.

Examples of the phosphoric acid ester include trimethyl phosphate, triethyl phosphate, ethyl dimethyl phosphate, diethyl methyl phosphate, tripropyl phosphate, tributyl phosphate, tri(trifluoromethyl)phosphate, tri(trichloromethyl)phosphate, tri(trifluoroethyl)phosphate, tri(triperfluoroethyl)phosphate, 2-ethoxy-1,3,2-dioxaphosphoran-2-one, 2-trifluoroethoxy-1,3,2-dioxaphosphoran-2-one, and 2-methoxyethoxy-1,3,2-dioxaphosphoran-2-one.

Examples of the nitrile compound include acetonitrile. Examples of the amide compound include DMF. Examples of the sulfone include dimethyl sulfone and diethyl sulfone.

One kind of non-aqueous solvent may be used alone, or two or more kinds thereof may be used in combination.

Among the non-aqueous solvents, a lactone compound, a cyclic carbonic acid ester, a chain-like carbonic acid ester, or a phosphoric acid ester is preferable, a lactone compound, a cyclic carbonic acid ester, or a chain-like carbonic acid ester is still more preferable, and a mixed solution of a cyclic carbonic acid ester and a chain-like carbonic acid ester is particularly preferable, from the viewpoint of battery output and charging and discharging cycle characteristics. The most preferable one is a mixed solution of ethylene carbonate (EC) and dimethyl carbonate (DMC), or a mixed solution of ethylene carbonate (EC) and diethyl carbonate (DEC).

The lithium-ion battery produced by using the coated positive electrode active material particles for a lithium-ion battery according to the present invention has a high reliability under abnormal conditions. The details of the mechanism are not clear, however, it can be estimated as follows.

When the positive electrode particles under the charged state come into contact with the negative electrode particles, the temperature rises. The electrolyte solution solvent contained in the resin is gasified. Positive pressure at the time of gasification causes:

(1) the contacting positive and negative electrode particles separate; and
(2) the conductive auxiliary agent in the resin comes to have conductivity due to the structure, and the positive pressure during gasification breaks the structure.

(1) and (2) prevent the loss of conductivity and localized current flow, thereby suppressing the temperature rise inside the battery.

[Example 1]

The present invention will be described further with reference to, but not limited to, Examples and Comparative examples. Unless otherwise particularly specified, Unless otherwise specified, % means % by weight and parts mean parts by weight.

<Production Example 1>

70.0 parts of toluene was placed in a four-necked flask equipped with a stirrer, a thermometer, a reflux condenser, a dropping funnel, and a nitrogen gas introduction tube, and the temperature was raised to 75°C. Next, a solution obtained by blending monomer composition (95.0 parts of dodecyl methacrylate, 4.6 parts of methacrylic acid and 0.4 parts of 1,6-hexanediol dimethacrylate) and 20 parts of DMF, and an initiator solution obtained by dissolving 0.8 parts of 2,2'azo-bis(2-methylbutyronitrile) in 10.0 parts of DMF were continuously added dropwise to the four-necked flask over 2 hours under stirring by using a dropping funnel, while blowing nitrogen thereinto, to carry out radical polymerization. After completion of the dropwise addition, the reaction was continued for 3 hours at 75°C. Then, the temperature was raised to 80°C and the reaction was continued for 3 hours to obtain a copolymer solution having a resin concentration of 50% by weight. The obtained copolymer solution was transferred to a Teflon (registered trade name) vat and dried under reduced pressure at 120°C and 0.01 MPa for 3 hours to distill off toluene and DMF, whereby a copolymer was obtained. The copolymer is crudely crushed by a hammer, and then was further subjected to mortar pulverization in a mortar to obtain a polymer compound for coating (R-1).

The acid value of (R-1) was 30 mg KOH/g, and the weight average molecular weight (Mw) thereof was 90,000.

< Acid Value Measurement Conditions>

Device: Automatic titrator COM-1700 (HIRANUMA Co., Ltd.)
Measurements were carried out using an automatic titrator [COM-1700 (HIRANUMA Co., Ltd.)] in accordance with the potentiometric titration method described in JIS K 0070-1922.

<GPC Measurement Conditions>

Device: Alliance GPC V2000 (Waters Corporation)
Solvent: Ortho-dichlorobenzene, DMF, THF
Standard substance: Polystyrene
Sample concentration: 3 mg/ml
**Column solid phase: PLgel 10 $\mu$m, MIXED-B**, two columns connected in series
(Polymer Laboratories Limited)
Column temperature: 135° C

<Production Example 2-5>

Polymer compounds for coating (R-2) to (R-5) were obtained similar to Production Example 1 except that Production Example 1 used ester compound (a1-11), anionic monomer (a1-12), copolymerizable vinyl monomer (c1), and crosslinking agent (d1) in Table 1-1.
The acid values and weight-average molecular weight of the polymer compound for coatings (R-2) to (R-5) are shown in Table 1-1.

<Example 1-1>

[Production Of Coated Positive Electrode Active Material Particles]

100 parts of a positive electrode active material powder (LiNi$_{0.8}$Co$_{0.15}$Al$_{0.05}$O$_2$ powder, **volume average particle size: 4 $\mu$m) was placed in an all**-purpose mixer, High Speed Mixer FS25 [available from EARTHTECHNICA Co., Ltd.], and at room temperature and in a state of the powder being stirred at 720 rpm, 12.0 parts of a polymer compound for coating solution (25 wt% solution) obtained by dissolving the polymer compound for coating in toluene was added dropwise over 2 minutes, and then the resultant mixture was further stirred for 5 minutes.
Next, in a state of the resultant mixture being stirred, 3.0 parts of acetylene black [DENKA BLACK (registered trade name) available from Denka Company Limited] was divisionally added as a conductive auxiliary agent in 2 minutes, and stirring was continued for 30 minutes. Then, the pressure was reduced to 0.01 MPa while maintaining the stirring, the temperature was subsequently raised to 140°C while maintaining the stirring and the degree of pressure reduction, and the stirring, the degree of pressure reduction, and the temperature were maintained for 8 hours to distill off the volatile matter. The obtained powder was classified with a sieve having a mesh size of **106 $\mu$m to obtain a coated positive electrode active material (P-1)**. The coverage of coated positive electrode active material particles (P-1) by XPS was 82%.

<Examples 1-2 to 1-13, Comparison Examples 1-1 to 1-2>

Coated positive electrode active material particles (P-2) to (P-13) and (P'-1) to (P'-2) were obtained similar to Production Example 1-1 except that Example 1 used positive electrode active material powder, polymer compound for coating solution, and conductive auxiliary agent in Table 1-2. The coverage of each of coated positive electrode active material particles by XPS was measured.
For each of the obtained coated positive electrode active material particles (P), a lithium-ion battery for positive electrode evaluation was produced to measure 50-cycle (cyc) capacity retention rate of the lithium-ion batteries was measured in accordance with the following procedure.
The results are shown in Table 1-2. In Table 1-2, "DMSO" is dimethyl sulfoxide.

[Production of Lithium-ion battery for Positive Electrode Evaluation]

42 parts of an electrolyte solution for a lithium ion battery prepared by dissolving LiPF$_6$ at a proportion of 1 mol/L in a mixed solvent (volume ratio 1:1) of ethylene carbonate (EC) and diethyl carbonate (DEC) and 4.2 parts of a carbon fiber [available from Osaka Gas Chemicals Co., Ltd., Donna Carbo Milled S-243] were mixed using a planetary stirring type mixing and kneading device {Awatori Rentaro [THINKY Corporation]} at 2,000 rpm for 7 minutes, subsequently 30 parts of the electrolyte solution and 206 parts of the coated positive electrode active material were added, and then stirring was further carried out at 2,000 rpm for 1.5 minutes with Awatori Rentaro. Then, after 20 parts of the electrolyte solution was further added, stirring with Awatori Rentaro was mixed at 2,000 rpm for 1 minute, and after 2.3 parts of the electrolytic solution was further added, stirring with Awatori Rentaro was carried out for mixing at 2,000 rpm for 1.5 minutes, whereby a positive electrode active material slurry was prepared.

The obtained positive electrode active material slurry was applied onto one side of carbon-coated aluminum foil each having **the thickness of 50 μm** and pressed at a pressure of 10 MPa for about 10 seconds to prepare a lithium-ion battery for positive electrode evaluation (3 cm × 3 cm) having the thickness of **400 μm**.

Carbon-coated aluminum foil (3 cm × 3 cm) with a terminal (5 mm × 3 cm), one piece of separator (a cell guard 2500 PP) (5 cm × 5 cm), and copper foil (3 cm × 3 cm) with a terminal (5 mm × 3 cm) were laminated in the same direction with two terminals coming out in the same direction and sandwiched between two sheets of commercially available thermally bonded aluminum laminate film (8 cm × 8 cm), and one side with a terminal protruding was thermally bonded to produce a laminated cell for positive electrode evaluation.

Next, the positive electrode for a lithium-ion battery for evaluation (3 cm × 3 cm) obtained above was inserted between the carbon-coated aluminum foil of the separator in the direction of the carbon-coated aluminum foil of the laminate cell coming into contact with the carbon-coated aluminum foil of the positive electrode for a lithium-ion battery. Further, 70 μL of electrolyte solution was poured over the electrode to allow the electrode to absorb the electrolyte solution. Next, 70 μL of electrolyte solution was also poured onto the separator.

Then, lithium foil was inserted between the separator and the copper foil, and two sides orthogonal to the previously heat-sealed one side were heat-sealed.

After that, 70 μL of electrolyte solution was further poured through the opening, and the laminated cell was sealed by heat-sealing the opening while creating a vacuum inside the cell using a vacuum sealer, whereby the lithium-ion battery for positive electrode evaluation was obtained.

<Measurement of 50 cyc capacity retention rate of the lithium-ion battery, evaluation of cycle characteristics>

At 45°C, the obtained lithium-ion battery for positive electrode evaluation was evaluated by the following method using a charging and discharging measuring device "HJ-SD8" [manufactured by HOKUTO DENKO Corporation].

After charging to 4.2 V by a constant current and constant voltage method also referred to as CCCV mode) at a current of 0.1 C and resting for 10 minutes, the battery was discharged to 2.6 V at a current of 0.1 C. Charging and discharging were repeated until 50 cycles (50cyc).

From the discharge capacity of the 1st cyc and the discharge capacity of the 50th cyc, the capacity retention rate was calculated by the following formula.

$$[50 \text{ cyc capacity retention rate } (\%)] = [\text{Discharge capacity of the 50th cyc}] \times 100/[\text{Discharge capacity of the 1st cyc}]$$

[Table 1-1]

| Polymer compound | | Production Example 1 | Production Example 2 | Production Example 3 | Production Example 4 | Production Example 5 |
|---|---|---|---|---|---|---|
| | | R-1 | R-2 | R-3 | R-4 | R-5 |
| Ester compound (a1-11) | Dodecyl methacrylate | 95.0 | 18.5 | 30 | - | - |
| | 2-ethylhexyl acrylic acid | - | - | 35 | 80 | 30 |
| | 2-ethylhexyl methacrylate | - | 80 | - | - | 65 |
| Anionic monomer (a1-12) | Acrylic acid | - | - | 4.5 | 19.8 | 4.6 |
| | Methacrylic acid | 4.6 | 1 | - | - | - |
| Monomer (c1) | Vinylpyrrolidone | - | - | 30 | - | - |
| Crosslinking agent (d1) | 1,6-hexanediol methacrylate | 0.4 | 0.5 | 0.5 | 0.2 | 0.4 |

(continued)

| Polymer compound | Production Example 1 | Production Example 2 | Production Example 3 | Production Example 4 | Production Example 5 |
|---|---|---|---|---|---|
| | R-1 | R-2 | R-3 | R-4 | R-5 |
| Acid value | 30 | 7 | 35 | 154 | 36 |
| Mw | 90000 | 80000 | 100000 | 90000 | 90000 |

[Table 1-2]

| | Coated positive electrode active material particles | Positive electrode active material powder | | | Polymer compound solution for coating | | | | Conductive auxiliary agent | | Coverage (%) | Capacity retention rate (%) | Surface free energy of active material (mn/m) | Surface free energy of solvent (mn/m) | $\Delta E$ (mN/m) |
| | | Type of active material | Particle diameter ($\mu$m) | Number of parts | Polymer compound | Solvent | Concentration (% by weight) n. | Number of parts | Type of conducive auxiliary agent | Number of parts | | | | | |
|---|---|---|---|---|---|---|---|---|---|---|---|---|---|---|---|
| Example 1-1 | P-1 | $LiNi_{0.8}Co_{0.15}Al_{0.005}O_2$ | 4 | 100 | R-1 | Toluene | 25 | 12 | Acetylene black | 3 | 82 | 99 | 48.4 | 28 | 20.4 |
| Example 1-2 | P-2 | $LiN_{0.8}Co_{0.15}·Al_{0.05}O_2$ | 4 | 100 | R-1 | Acet one | 25 | 12 | Acetylene black | 3 | 71 | 98 | 48.4 | 23 | 25.4 |
| Example 1-3 | P-3 | $LiNi_{0.8}Co_{0.15}Al_{0.05}O_2$ | 4 | 100 | R-2 | Toluene | 25 | 12 | Acetylene black | 3 | 80 | 97 | 48.4 | 28 | 20.4 |
| Example 1-4 | P-4 | $LiNi_{0.8}Co_{0.15}Al_{0.05}O_2$ | 4 | 100 | R-3 | Toluene | 25 | 12 | Acetylene black | 3 | 79 | 97 | 48.4 | 28 | 20.4 |
| Example 1-5 | P-5 | $LiNi_{0.8}Co_{0.15}Al_{0.05}O_2$ | 4 | 100 | R-4 | Toluene | 25 | 12 | Acetylene black | 3 | 86 | 98 | 48.4 | 28 | 20.4 |
| Example 1-6 | P-6 | $LiNi_{0.8}Co_{0.15}Al_{0.05}O_2$ | 4 | 100 | R-5 | Toluene | 25 | 12 | Acetylene black | 3 | 84 | 97 | 48.4 | 28 | 20.4 |
| Example 1-7 | P-7 | $LiNi_{0.8}Co_{0.15}Al_{0.05}O_2$ | 4 | 100 | R-1 | Toluene | 25 | 4 | Acetylene black | 3 | 65 | 96 | 48.4 | 28 | 20A |
| Example 1-8 | P-8 | $LiNi_{0.8}Co_{0.15}Al_{0.05}O_2$ | 4 | 100 | R-1 | Toluene | 25 | 24 | Acetylene black | 3 | 96 | 96 | 48.4 | 28 | 20.4 |
| Example 1-9 | P-9 | $LiNi_{077}Co_{0.2}Al_{0.03}O_2$ | 4 | 100 | R-1 | Toluene | 25 | 12 | Acetylene black | 3 | 76 | 96 | 46.1 | 28 | 18.1 |
| Example 1-10 | P-10 | $LiNi_{0.83}Co_{0.14}Al_{0.03}O_2$ | 4 | 100 | R-1 | Toluene | 25 | 12 | Acetylene black | 3 | 85 | 99 | 50.3 | 28 | 22.3 |
| Example 1-11 | P-11 | $LiNi_{0.87}Co_{0.08}Al_{0.05}O_2$ | 4 | 100 | R-1 | Toluene | 25 | 12 | Acetylene black | 3 | 88 | 97 | 50.9 | 28 | 22.9 |
| Example 1-12 | P-12 | $LiNi_{0.9}Co_{0.04}Al_{0.04}O_2$ | 4 | 100 | R-1 | Toluene | 25 | 12 | Acetylene black | 3 | 90 | 98 | 52.1 | 28 | 24.1 |

(continued)

| | Coated positive electrode active material particles | Positive electrode active material powder | | | Polymer compound solution for coating | | | | Conductive auxiliary agent | | Coverage (%) | Capacity retention rate (%) | Surface free energy of active material (mn/m) | Surface free energy of solvent (mn/m) | $\Delta E$ (mN/m) |
|---|---|---|---|---|---|---|---|---|---|---|---|---|---|---|---|
| | | Type of active material | Particle diameter ($\mu$m) | Number of parts | Polymer compound | Solvent | Concentration (% by weight) n. | Number of parts | Type of conducive auxiliary agent | Number of parts | | | | | |
| Example 1-13 | P-13 | $LiNi_{0.86}Co_{0.06}Al_{0.06}O_2$ | 4 | 100 | R-1 | Toluene | 25 | 12 | Acetylene black | 3 | 90 | 98 | 52.1 | 28 | 24.1 |
| Comparative example 1-1 | P-1 | $LiNi_{0.8}Co_{0.15}Al_{0.05}O_2$ | 4 | 100 | R-1 | Hexane | 25 | 12 | Acetylene black | 3 | 56 | 93 | 48.4 | 18 | 30.4 |
| Comparative example 1-2 | P-2 | $LiNi_{0.8}Co_{0.15}Al_{0.05}O_2$ | 4 | 100 | R-1 | DMSO | 25 | 12 | Acetylene black | 3 | 99 | 81 | 48.4 | 43 | 5.4 |

The results in Table 1-1 and Table 1-2 show that the coated positive electrode active material particles (P-1) to (P-13) of Examples 1-1 to 1-13 are superior in capacity retention rate to the coated positive electrode active material particles (P'-1) to (P'-2) of Comparative Examples 1-1 to 1-2, and give a lithium-ion battery that is excellent in cycle characteristics.

In the coated positive electrode active material particles for a lithium-ion battery of the present invention, the coating layer may further contain ceramic particles. Examples of the coated positive electrode active material particles for a lithium-ion battery of the present invention include positive electrode active material particles in which a coating layer at least partially covers a surface of the positive electrode active material particles, and the coating layer may contain a polymer compound for coating and a conductive auxiliary agent.

For example, JP 2017-160294 A discloses a resin composition for coating active material which includes a polymer of monomer composition containing an ester compound of a C1-C12 monovalent aliphatic alcohol and a (meth)acrylic acid and an anionic monomer, the acid value of the polymer being 30 to 700; and also discloses a coated active material which includes an active material having a surface at least partially coated with a coating layer containing the resin composition for coating active material.

Lithium-ion batteries have been widely used in a variety of applications, and may be used in high temperature environments, for example.

Lithium-ion batteries using conventional coated active materials have the problem that that when used in high temperature environments, side reactions between the electrolyte solution and the coated active material may occur, resulting in degradation of the lithium-ion battery (specifically, an increase in internal resistance); there was still room for improvement.

In the coated positive electrode active material particles, the coating layer contains a polymer compound, a conductive auxiliary agent, and ceramic particles, so that it is possible to suppress side reactions to be occurred between the electrolyte solution and the coated positive electrode active material particles, thereby preventing an increase in internal resistance of the lithium-ion battery.

In the coated positive electrode active material particles, examples of the positive electrode active material particles include those described above.

In the coated positive electrode active material particles, the polymer compound constituting the coating layer is preferably a resin containing a polymeric monomer with acrylic monomer (a2) as an essential constituent monomer.

Specifically, the polymer compound constituting the coating layer is preferably a polymer of a monomer composition containing acrylic acid (a2-0) as acrylic monomer (a2). In the monomer composition described above, the content of acrylic acid (a2-0) is preferably more than 90% by weight and 98% by weight or less based on the total weight of the monomer. From the viewpoint of flexibility of the coating layer, the content of acrylic acid (a2-0) is preferably 93.0 to 97.5% by weight based on the total weight of the monomer, and more preferably 95.0 to 97.0 % by weight.

The polymer compound constituting the coating layer may contain a monomer (a2-1) having a carboxyl or acid anhydride group other than acrylic acid (a2-0) as the acrylic monomer (a2).

Examples of monomer (a2-1) having a carboxyl or acid anhydride group other than acrylic acid (a2-0) include a C3-C15 monocarboxylic acid such as methacrylic acid, crotonic acid and cinnamic acid; a C4-C24 dicarboxylic acids such as maleic (anhydride), fumaric acid, itaconic (anhydride), citraconic acid and mesaconic acid; and a C6-C24 trivalent to tetravalent or more than trivalent polycarboxylic acid such as aconitic acid.

The polymer compound constituting the coating layer may contain a monomer (a2-2) represented by the following formula (2-1) as an acrylic monomer (a2):

$$CH_2 = C(R^1)COOR^2 \qquad (2\text{-}1)$$

in the formula (2-1), $R^1$ is a hydrogen atom or a methyl group, and $R^2$ is a C4-C12 linear or C3-C36 branched alkyl group.

In the monomer (a2-2) represented by the above formula (2-1), $R^1$ represents a hydrogen atom or a methyl group. $R^1$ is preferably a methyl group.

$R^2$ is preferably a C4-C12 linear or C3-C36 branched alkyl group, or a C13-C36 branched alkyl group.

(a2-21) Ester compounds wherein $R^2$ is a C4-C12 linear or branched alkyl group Examples of C4-C12 linear alkyl group include butyl groups, pentyl groups, hexyl groups, heptyl groups, octyl groups, nonyl groups, decyl groups, undecyl groups, and dodecyl groups.

Examples of C4-C12 branched alkyl group include 1-methylpropyl groups (sec-butyl groups), 2-methylpropyl groups, 1,1-dimethylethyl groups (tert-butyl groups), 1-methylbutyl groups, 1,1-dimethylpropyl groups, 1,2-dimethylpropyl groups, 2,2-dimethylpropyl groups (neopentyl groups), 1-methylpentyl groups, 2-methylpentyl groups, 3-methylpentyl groups, 4-methylpentyl groups, 1,1-dimethylbutyl groups, 1,2-dimethylbutyl groups, 1,3-dimethylbutyl groups, 2,2-dimethylbutyl groups, 2,3-dimethylbutyl groups, 1-ethylbutyl groups, 2-ethylbutyl groups, 1-methylhexyl groups, 2-methylhexyl groups, 2-methylhexyl groups, 4-methylhexyl groups, 5-methylhexyl groups, 1-ethylpentyl groups, 2-ethylpentyl groups, 3-ethylpentyl groups, 1,1-dimethylpentyl groups, 1,2-dimethylpentyl groups, 1,3-dimethylpentyl groups, 2,2-dimethylpentyl groups, 2,3-dimethylpentyl groups, 2-ethylpentyl groups, 1-methylheptyl groups, 2-methylheptyl groups, 3-methylheptyl groups, 4-methylheptyl groups, 5-methylheptyl groups, 6-methylheptyl groups, 1,1-Dimethylhexyl groups, 1,2-dimethylhexyl groups, 1,3-dimethylhexyl groups, 1,4-dimethylhexyl groups, 1,5-dimethylhexyl groups, 1-ethylhexyl groups, 2-ethylhexyl groups, 1-methyloctyl groups, 2-methyloctyl groups, 3-methyloctyl groups, 4-methyloctyl groups, 5-methyloctyl groups, 6-methyloctyl groups, 7-methyloctyl groups, 1,1-dimethylheptyl groups, 1,2-dimethylheptyl groups, 1,3-dimethylheptyl groups, 1,4-dimethylheptyl groups, 1,5-dimethylheptyl groups, 1,6-dimethylheptyl groups, 1-ethylheptyl groups, 2-ethylheptyl groups, 1-methylnonyl groups, 2-methylnonyl groups, 3-methylnonyl groups, 4-methylnonyl groups, 5-methylnonyl groups, 6-methylnonyl groups, 7-methylnonyl groups, 8-methylnonyl groups, 1,1-dimethyloctyl groups, 1,2-dimethyloctyl groups, 1,3-dimethyloctyl groups, 1,4-dimethyloctyl groups, 1,5-dimethyloctyl groups, 1,6-dimethyloctyl groups, 1,7-dimethyloctyl groups, 1-ethyl octyl groups, 2-ethyloctyl groups, 1-methyldecyl groups, 2-methyldecyl groups, 3-methyldecyl groups, 4-methyldecyl groups, 5-methyl-decyl groups, 6-methyldecyl groups, 7-methyl-decyl groups, 8-methyldecyl groups, 9-methyldecyl groups, 1,1-dimethylnonyl groups, 1,2-dimethylnonyl groups, 1,3-dimethylnonyl groups, 1,4-dimethylnonyl groups, 1,5-dimethylnonyl groups, 1,6-dimethylnonyl groups, 1,7-dimethylnonyl groups, 1,8-dimethylnonyl groups, 1-ethylnonyl groups, 2-ethylnonyl groups, 1-methyl-undecyl groups, 2-methyl-undecyl groups, 3-methyl-undecyl groups, 4-methyl-undecyl groups, 5-methyl-undecyl groups, 6-methyl-undecyl groups, 7-methyl-undecyl groups, 8-methyl-undecyl groups, 9-methyl-undecyl groups, 10-methyl-undecyl groups, 1,1-dimethyldecyl groups, 1,2-dimethyldecyl groups, 1,3-dimethyldecyl groups, 1,4-dimethyldecyl groups, 1,5-dimethyldecyl groups, 1,6-dimethyldecyl groups, 1,7-dimethyldecyl groups, 1,8-dimethyldecyl groups, 1,9-dimethyldecyl groups, 1-ethyldecyl groups, and 2-ethyldecyl groups, and the like. Of these, 2-ethylhexyl groups are preferred in particular.

(a2-22) Ester compounds wherein $R^2$ is a C13-C36 branched alkyl group

Examples of C13-C36 branched alkyl group include 1-alkylalkyl groups [1-methyl dodecyl groups, 1-butyl eicosyl groups, 1-hexyloctadecyl groups, 1-octylhexadecyl groups, 1-decyltetradecyl groups, 1 undecyl tridecyl groups, and the like.], 2-alkylalkyl groups [2-methyldodecyl groups, 2-hexyloctadecyl groups, 2-octylhexyadecyl groups, 2-decyltetradecyl groups, 2-undecyltridecyl groups, 2-dodecylhexadecyl groups, 2-tridecylpentadecyl groups, 2-decyloctadecyl groups, 2-tetradecyloctadecyl groups, 2-hexadecyloctadecyl groups 2-hexadecyloctadecyl groups, 2-tetradecyleicosyl groups, 2-hexadecyleicosyl groups, and the like.], 3 to 34-alkylalkyl groups (3-alkylalkyl groups, 4-alkylalkyl groups, 5-alkylalkyl groups, 32-alkylalkyl groups, 33-alkylalkyl groups, and 34-alkylalkyl groups, and the like.), and mixed alkyl groups containing one or more branched alkyl groups such as a hydroxyl groups-removed residue obtained from propylene oligomers (heptamer to undecamer), ethylene/propylene (molar ratio 16/1 to 1/11) oligomers, isobutylene oligomers (heptamer to octamer) and α-olefin (C5-C20) oligomers (tetramer to octamer), and the like.

The polymer compound constituting the coating layer may contain an ester compound (a2-3) of C1-C3 monovalent aliphatic alcohols and (meth)acrylic acid as the acrylic monomer (a2).

Examples of C1-C3 monovalent aliphatic alcohol constituting ester compound (a2-3) include methanol, ethanol, 1-propanol and 2-propanol, and the like.

In addition, (meth)acrylic acid means acrylic acid or methacrylic acid.

The polymer compound constituting the coating layer is preferably a polymer of a monomer composition containing acrylic acid (a2-0) and at least one of monomer (a2-1), monomer (a2-2) and ester compound (a2-3), more preferably a polymer of monomer composition containing acrylic acid (a2-0) and at least one of monomer (a2-1), ester compound (a2-21) and ester compound (a2-3), even more preferably a polymer of monomer composition containing acrylic acid (a2-0) and any one of monomer (a2-1), monomer (a2-2) and ester compound (a2-3), and most preferably a polymer of monomer composition containing acrylic acid (a2-0) and one of monomer (a2-1), ester compound (a2-21) and ester compound (a2-3).

Examples of the polymer compound constituting the coating layer include, for example, copolymers of acrylic acid and maleic acid using maleic acid as monomer (a2-1), copolymers of acrylic acid and 2-ethylhexyl methacrylate using 2-ethylhexyl methacrylate as monomer (a2-2), and copolymers of acrylic acid and methyl methacrylate using methyl methacrylate as the ester compound (a2-3).

Total content of monomer (a2-1), monomer (a2-2) and ester compound (a2-3) is preferably 2.0 to 9.9 % by weight, and more preferably 2.5 to 7.0 % by weight, based on the total weight of monomers from the viewpoint of suppression of change in volume of positive electrode active material particles.

The polymer compound constituting the coating layer preferably contain no salt of an anionic monomer having a polymerizable unsaturated double bond and an anionic group (a2-4) as acrylic monomer (a2).

Examples of the structure having a polymerizable unsaturated double bond include vinyl groups, allyl groupts, styrenyl groups and (meth)acryloyl groups. Examples of the anionic group include sulfonic acid groups and carboxyl groups.

The anionic monomer having a polymerizable unsaturated double bond and an anionic group is a compound obtained by a combination of these; vinyl sulfonic acid, allylsulfonic acid, styrenesulfonic acid and (meth)acrylic acid are included, for example. In addition, the (meth)acryloyl group means acryloyl group or methacryloyl group. Examples of cation constituting the salt (a2-4) of anionic monomer include lithium, sodium, potassium and ammonium ions.

Further, the polymer compound constituting the coating layer may radical polymerizable monomers (a2-5) copolymerizable with acrylic acid (a2-0), monomers (a2-1), monomers (a2-2) and ester compounds (a2-3) to the extent that physical properties are not damaged.

As radical polymerizable monomers (a2-5), monomers that do not contain active hydrogen are preferable, and monomers from (a2-51) to (a2-58) below can be used.

(a2-51) Hydrocarbyl (meth)acrylate formed from a C13-20 linear aliphatic monool, a C5-C20 alicyclic monool or a C7-C20 aromatic aliphatic monool

The monools include (i) linear aliphatic monools (tridecyl alcohol, myristyl alcohol, pentadecyl alcohol, cetyl alcohol, heptadecyl alcohol, stearyl alcohol, nonadecyl alcohol, arachidyl alcohol, and the like.), (ii) alicyclic monools (cyclopentyl alcohol, cyclohexyl alcohol, cycloheptyl alcohol, cyclooctyl alcohol, and the like.), (iii) aromatic aliphatic monools (benzyl alcohol, and the like.), and a mixture of those two or more kinds of them.

(a2-52) Poly (n=2 to 30) oxyalkylene (C2-C4) alkyl (C1-C18) ether (meth)acrylate [Methanol acrylate, methanol acrylate with 10 mol ethylene oxide (hereinafter abbreviated as EO) adduct of methanol, methanol acrylate with 10 mol propylene oxide (hereinafter abbreviated as PO) adduct of methanol, and the like.]

(a2-53) Nitrogen-containing vinyl compound

(a2-53-1) Amide-containing vinyl compound

(i) C3-C30 (meth)acrylamide compounds, such as N,N-dialkyl (C1-C6) or diallylalkyl (C7-C15) (meth)acrylamide (N,N-dimethylacrylamide, N,N-dibenzylacrylamide, and the like.), diacetoneacrylamide

(ii) Vinyl compounds containing C4-C20 amide groups, such as N-methyl-N-vinylacetamide, cyclic amides [pyrrolidone compounds (C6-C13), such as N-vinylpyrrolidone)], excluding (meth)acrylamide compounds described above

(a2-53-2) (Meth)acrylate compound

(i) Dialkyl (C1-C4) aminoalkyl (C1-C4) (meth)acrylate [N,N-dimethylaminoethyl (meth)acrylate, N,N-diethyl aminoethyl (meth)acrylate, t-butylaminoethyl (meth)acrylate, morpholinoethyl (meth)acrylate, and the like.]

(ii) Quaternary ammonium group-containing (meth)acrylate {quaternary product (quaternized with a quaternizing agent such as methyl chloride, dimethyl sulfate, benzyl chloride, dimethyl carbonate, and the like.) of tertiary amino group-containing (meth)acrylate [N, N-dimethylaminoethyl (meth)acrylate, N, N-diethylaminoethyl (meth)acrylate, and the like.] and the like.}

(a2-53-3) Heterocyclic vinyl compound

Pyridine compounds (C7-C14, e.g., 2- or 4-vinylpyridine), imidazole compounds (C5-C12, e.g., N-vinylimidazole), pyrrole compounds (C6-C13, e.g., N-vinylpyrrole), pyrrolidone compounds (C6-C13, e.g., N-vinyl-2-pyrrolidone)

(a2-53-4) Nitrile-containing vinyl compound

Vinyl compounds containing C3-C15 nitrile groups, e.g., (meth)acrylonitrile, cyanostyrene, cyanoalkyl (C1-C4) acrylate

(a2-53-5) Other nitrogen-containing vinyl compounds

Vinyl compounds containing nitro groups (C8-C16, e.g., nitrostyrene), and the like.

(a2-54) Vinyl hydrocarbon

(a2-54-1) Aliphatic vinyl hydrocarbon

C2-C18 or more Olefins (ethylene, propylene, butene, isobutylene, pentene, heptene, diisobutylene, octene, dodecene, octadecene, and the like.), C4-C10 or more dienes (butadiene, isoprene, 1,4-pentadiene, 1,5-hexadiene, 1,7-octadiene, and the like.), and the like.

(a2-54-2) Alicyclic vinyl hydrocarbon

C4-C18 or more cyclic unsaturated compounds, e.g. cycloalkenes (e.g. cyclohexene), (di)cycloalkadienes [e.g. (di)cyclopentadiene], terpenes (e.g. pinene and limonene), indene

(a2-54-3) Aromatic vinyl hydrocarbon

C8-C20 or more aromatic unsaturated compounds, e.g. styrene, $\alpha$-methylstyrene, vinyltoluene, 2,4-dimethylstyrene, ethylstyrene, isopropylstyrene, butylstyrene, phenylstyrene, cyclohexylstyrene, benzylstyrene

(A2-55) Vinylester

Aliphatic vinyl esters [C4-C15, e.g., alkenyl esters of aliphatic carboxylic acids (mono- or dicarboxylic acids) (e.g., vinyl acetate, vinyl propionate, vinyl butyrate, diaryl adipate, isopropenyl acetate, vinyl methoxyacetate)]

Aromatic vinyl esters [C9-C20, e.g., alkenyl esters of aromatic carboxylic acids (mono- or dicarboxylic acids) (e.g., vinyl benzoate, diaryl phthalate, methyl-4-vinyl benzoate), esters containing aromatic rings of aliphatic carboxylic acids (e.g., acetoxystyrene)]

(a2-56) Vinylether

Aliphatic vinyl ether [C3-C15, e.g. vinyl alkyl (C1-C10) ether (vinyl methyl ether, vinyl butyl ether, vinyl 2-ethylhexyl ether, and the like.) vinyl butyl ether, vinyl 2-ethylhexyl ether, and the like.), vinyl alkoxy (C1-C6) alkyl (C1-C4) ether (vinyl-2-methoxyethyl ether, methoxybutadiene, 3,4-dihydro 1,2-pyran, 2-butoxy-2'-vinyloxydiethyl ether, vinyl-2-ethyl mercaptoethyl ether, and the like.), poly(2-4)(meth)aryloxyalkane (C2-C6) (diaryloxyethane, triaryloxyethane, tetraaryloxybutane, tetrametharyloxyethane, and the like.)], aromatic vinyl ethers (C8-C20, e.g., vinyl phenyl ether, phenoxystyrene)

(a2-57) Vinyl ketone

Aliphatic vinyl ketones (C4-C25, e.g., vinyl methyl ketone, vinyl ethyl ketone), aromatic vinyl ketones (C9-C21, e.g., vinyl phenyl ketone)

(a2-58) Unsaturated dicarboxylic acid diester

C4-C34 unsaturated dicarboxylic acid diesters, e.g. dialkyl fumarates (two alkyl groups are C1-C22 linear, branched chain or alicyclic groups), dialkyl maleates (two alkyl groups are C1-C22 linear, branched chain or alicyclic groups)

In the case where the radical polymerizable monomer (a2-5) is contained, the content thereof is preferably 0.1 to 3.0% by weight based on the total weight of monomer.

In the coated positive electrode active material particles described above, the lower limit of weight-average molecular weight of the polymer compound constituting the coating layer is preferably 3,000, more preferably 5,000, and even more preferably 7,000. On the other hand, the upper limit of weight-average molecular weight of the polymer compound is preferably 100,000, and more preferably 70,000.

As described above, the polymer compound constituting the coating layer can be produced by a known polymerization method using a known polymerization initiator.

Examples of solvent used for solution polymerization include, for example, esters (C2-C8, e.g., ethyl acetate and butyl acetate), alcohols (C1-C8, e.g., methanol, ethanol and octanol), hydrocarbons (C4-C8, e.g., n-butane, cyclohexane and toluene), amides (e.g., N,N-dimethylformamide (hereinafter referred to as DMF)) and ketones (C3-C9, e.g., methyl ethyl ketone). From the viewpoint of adjusting the weight-average molecular weight within a preferable range, the use amount thereof is preferably 5 to 900 % by weight, more preferably 10 to 400 % by weight, even more preferably 30 to 300 % by weight based on the total weight of monomers, and the monomer concentration is preferably 10 to 95 % by weight, more preferably 20 to 90 % by weight, and even more preferably 30 to 80 % by weight.

Examples of dispersant in emulsion and suspension polymerization include water, alcohol (e.g., ethanol), esters (e.g., ethyl propionate), light naphtha; examples of emulsifier include higher fatty acid (C10-C24) metal salts (e.g., sodium oleate and sodium stearate), higher alcohol (C10-C24) sulfate metal salts (e.g., sodium lauryl sulfate), ethoxylated tetramethyldecindiol, sodium sulfoethyl methacrylate, and dimethylamino methyl methacrylate. Polyvinyl alcohol, polyvinyl pyrrolidone, and the like. may also be added as stabilizers.

Monomer concentration in solution or dispersion is preferably 5~95 % by weight, more preferably 10~90 % by weight, and even more preferably 15~85 % by weight, and the use amount of polymerization initiator is preferably 0.01~5 % by weight, and more preferably 0.05~2 % by weight based on the total weight of the monomer.

For the polymerization, known chain transfer agents, such as mercapto compounds (dodecyl mercaptan, n-butyl mercaptan, and the like.) and/or halogenated hydrocarbons (carbon tetrachloride, carbon tetrabromide, benzyl chloride, and the like.) can be used.

The polymer compound constituting the coating layer may be a crosslinked polymer obtained by crosslinking the polymer compound with a crosslinking agent (A'2) having a reactive functional group that reacts with carboxyl groups {preferably polyepoxy compounds (a'2-1) [such as polyglycidyl ethers (bisphenol A diglycidyl ether, propylene glycol diglycidyl ether and glycerin triglycidyl ether) and polyglycidylamines (N,N-diglycidylaniline and 1,3-bis(N,N-diglycidylamino methyl))] and/or polyol compounds (a'2-2) (ethylene glycol and the like.) }.

Examples of a method of crosslinking the polymer compound constituting the coating layer using the crosslinking agent (A'2) include a method of crosslinking positive electrode active material particles after coated with the polymer compound constituting the coating layer; specifically, a method of causing a rection of crosslinking of the polymer compound constituting the coating layer **by the crosslinking agent (A'2)** on the surface of the positive electrode active material particles in which the positive electrode active material particles and a resin solution containing the polymer compound constituting the coating layer are mixed and the solvent is removed therefrom so as to produce the coated active material particles. Then, the solution **containing the crosslinking agent (A'2) is mixed with the coated active material particles** and heated, thereby causing the removal of solvent and crosslinking reaction. The heating temperature is adjusted according to the type of crosslinking agent. When **polyepoxy compound (a'2-1)** is used as the crosslinking agent, however, the temperature thereof is preferably 70 **°C or higher, and when polyol compound (a'2-2)** is used, the temperature thereof is preferably 120°C or higher.

In the coated positive electrode active material particles, examples of the conductive auxiliary agent contained in the coating layer include those described above.

In the coated positive electrode active material particles, examples of the ceramic particles contained in the coating layer include metal carbide particles, metal oxide particles, glass ceramic particles, and the like.

Examples of the metal carbide particles include, for example, silicon carbide (SiC), tungsten carbide (WC), molybdenum carbide ($Mo_2C$), titanium carbide (TiC), tantalum carbide (TaC), niobium carbide (NbC), vanadium carbide (VC), zirconium carbide (ZrC), and the like.

Examples of the metal oxide particles include, for example, zinc oxide (ZnO), aluminum oxide ($Al_2O_3$), silicon dioxide ($SiO_2$), tin oxide ($SnO_2$), titania ($TiO_2$), zirconia ($ZrO_2$), indium oxide ($In_2O_3$), $Li_2B_4O_7$, $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_3PO_4$, $Li_2MoO_4$, $Li_3BO_3$, $LiBO_2$, $Li_2CO_3$, $Li_2SiO_3$, and perovskite-type oxide particles represented by $ABO_3$ (where A is at least one selected from the group consisting of Ca, Sr, Ba, La, Pr and Y, and B is at least one selected from the group consisting of Ni, Ti, V, Cr, Mn, Fe, Co, Mo, Ru, Rh, Pd and Re).

As the metal oxide particles, zinc oxide (ZnO), aluminum oxide ($Al_2O_3$), silicon dioxide ($SiO_2$), and lithium tetraborate ($Li_2B_4O_7$) are preferable from the viewpoint of suitably achieving suppression of side reactions that occur between the electrolyte solution and the coated positive electrode active material particles.

As the ceramic particles, glass ceramic particles are preferable from the viewpoint of suitably achieving the suppression of side reactions that occur between the electrolyte solution and the coated positive electrode active material particles.

One kind of them may be used alone, or two or more kinds may be used in combination.

The glass ceramic particles are preferably a lithium-containing phosphate compound having a rhombohedral crystal system, whose chemical formula is expressed by LixM"$_2P_3O_{12}$ (X = 1 to 1.7).

Here, M" is One or more elements selected from the group consisting of Zr, Ti, Fe, Mn, Co, Cr, Ca, Mg, Sr, Y, Sc, Sn, La, Ge, Nb, and Al. Some of P may be replaced by Si or B, and some of O may be replaced by F, Cl, and the like. For example, it is possible to use $Li_{1.15}Ti_{1.85}Al_{0.15}Si_{0.05}P_{2.95}O_{12}$, $Li_{1.2}Ti_{1.8}Al_{0.1}Ge_{0.1}Si_{0.05}P_{2.95}O_{12}$.

Further, materials having different compositions may be mixed or composited, and the surfaces thereof may be coated with glass electrolyte and the like. It is preferable to use glass ceramic particles that precipitate a crystalline phase of lithium-containing phosphate compounds with a NASICON-type structure by heat treatment.

Examples of the glass electrolyte include glass electrolyte disclosed in JP2019-96478A.

Here, the mixing ratio of $Li_2O$ in the glass ceramic particles is preferably 8 mass% or less from the viewpoint of oxide.

The structure other than NASICON type may be employed; a solid electrolyte may be used that is consist of Li, La, Mg, Ca, Fe, Co, Cr, Mn, Ti, Zr, Sn, Y, Sc, P, Si, O, In, Nb, F, has LISICON, perovskite, $\beta$-$Fe_2(SO_4)_3$, or $Li_3In_2(PO_4)_3$ type of crystal structure, and conducts Li ions at $1\times10^{-5}$ S/cm or higher at room temperature.

One kind of ceramic particles described above may be used alone, or two or more kinds may be used in combination.

In the coated positive electrode active material particles, the weight percent of the ceramic particles is preferably 0.5 to 5.0 % by weight based on the weight of the coated positive electrode active material particles.

The content of the ceramic particles within the range described above can suppress side reactions that occur between the electrolyte solution and the coated positive electrode active material particles.

The weight percent of the ceramic particles is preferably 2.0 to 4.0 % by weight based on the weight of the coated positive electrode active material particles.

In the coated positive electrode active material particles, the coverage obtained by the following formula is preferably 30 to 95% from the viewpoint of cycle characteristics.

The coverage (%) ={1-[BET specific surface area of the coated positive electrode active material particles/(BET specific surface area of the positive electrode active material particles $\times$ the weight percent of the positive electrode active material particles contained in the coated positive electrode active material + BET specific surface area of the conductive auxiliary agent $\times$ the weight percent of the conductive auxiliary agent contained in the coated positive electrode active material particles + BET specific surface area of the ceramic particles $\times$ the weight percent of the ceramic particles contained in the coated positive electrode active material particles)]} $\times$ 100

[Production Method of The Coated Positive Electrode Active Material Particles for a Lithium-Ion Battery]

A production method of coated positive electrode active material particles for a lithium-ion battery of the present invention(hereinafter also referred simply to as "a production method of coated positive electrode active material particles")includes a mixing step for mixing positive electrode active material particles, a polymer compound, a conductive auxiliary agent, a solvent, and, if necessary, ceramic particles.

Further, a production method of coated positive electrode active material particles of the present invention is preferably includes a step of removing solvent after the step of mixing described above.

The solvent is not specifically limited as long as it is an organic solvent capable of dissolving polymer compounds, and any known organic solvents can be selected and used as appropriate.

The first step of the production method of coated positive electrode active material particles is to mix the positive electrode active material particles, the polymer compound constituting the coating layer, the conductive auxiliary agent, and, if necessary, the ceramic particles in a solvent.

For example, when mixing the positive electrode active material particles, the polymer compound constituting the coating layer, the conductive auxiliary agent, and the ceramic particles, the order of mixing them is not specifically limited; a resin composition consisting of the polymer compound constituting the coating layer, the conductive auxiliary agent and ceramic particles that are mixed in advance may be further mixed with the positive electrode active material particles; the positive electrode active material particles, the polymer compound constituting the coating layer, the conductive auxiliary agent and the ceramic particles may be mixed simultaneously; or the positive electrode active material particles may be mixed with the polymer compound constituting the coating layer and further the conductive auxiliary agent and the ceramic particles are mixed therewith.

The coated positive electrode active material particles of the present invention can be obtained by coating the positive electrode active material particles with a coating layer containing the polymer compound, the conductive auxiliary agent and, if necessary, the ceramic particles: for example, while the electrode active material particles are stirred at 30 to 500 rpm in a universal mixer, a resin solution containing the polymer compound is added dropwise thereto over 1 to 90 minutes, and the conductive auxiliary agent and, if necessary, the ceramic particles are further added; while the mixture is stirred, the temperature is raised to 50° C to 200° C, and the pressure is reduced to 0.007 to 0.04 MPa; and the mixture is then kept in this state for 10 to 150 minutes and the solvent is removed.

The mixing ratio of the positive electrode active material particles and the resin composition containing the polymer compound constituting the coating layer, the conductive auxiliary agent and, if necessary, the ceramic particles are not specifically limited, but the weight ratio of the positive electrode active material particles and the resin composition is preferably 1:0.001 to 0.1.

[Positive Electrode for a Lithium-Ion Battery]

A positive electrode for a lithium-ion battery (hereinafter simply referred simply to as "positive electrode") includes a positive electrode active material layer containing the coated positive electrode active material particles of the present invention.

The coated positive electrode active material particles contained in the positive electrode active material layer are preferably 40 to 95 % by weight, more preferably 60 to 90 % by weight, based on the weight of the positive electrode active material layer from the viewpoint of dispersibility and electrode formability.

The positive electrode active material layer may further contain the electrolyte solution containing an electrolyte and a solvent.

As an electrolyte, an electrolyte used in the known electrolyte solution can be used, and examples thereof include lithium salts of inorganic anion, such as $LiPF_6$, $LiBF_4$, $LiSbF_6$, $LiAsF_6$, $LiClO_4$ and $LiN(FSO_2)_2$, and lithium salts of organic anion, such as $LiN(CF_3SO_2)_2$, $LiN(C_2F_5SO_2)_2$ and $LiC(CF_3SO_2)_3$. Among these, $LiN(FSO_2)_2$ is preferable from the viewpoints of battery output and charging and discharging cycle characteristics.

As the non-aqueous solvent, a non-aqueous solvent that is used in the known electrolytic solution can be used, and for example, a lactone compound, a cyclic or chain-like carbonic acid ester, a chain-like carboxylic acid ester, a cyclic or chain-like ether, a phosphoric acid ester, a nitrile compound, an amide compound, a sulfone, or a sulfolane, or a mixture thereof can be used.

The concentration of the electrolyte in the electrolyte solution is preferably 1.2 to 5.0 mol/L, more preferably 1.5 to 4.5 mol/L, even more preferably 1.8 to 4.0 mol/L, and particularly preferably 2.0 to 3.5mol/L.

Since such an electrolyte solution has an appropriate viscosity, a liquid film can be formed between the coated positive electrode active material particles, whereby apply the coated positive electrode active material particles with a lubrication effect (the ability to adjust the position of the coated positive electrode active material particles).

The positive electrode active material layer may further include a conductive auxiliary agent in addition to the conductive auxiliary agent included as needed in the coating layer of the coated positive electrode active material particles described above. The conductive auxiliary agent contained in the coating layer as needed is integrated with the coated positive electrode active material particles, whereas the conductive auxiliary agent contained in the positive electrode active material layer is included separately from the coated positive electrode active material particles, so they can be distinguished from each other.

As the conductive auxiliary agent that may be contained in the positive electrode active material layer, the one described in [Coated Positive Electrode Active Material Particles for a Lithium-ion Battery] can be used.

In the case where the positive electrode active material layer contains a conductive auxiliary agent, the total content of the conductive auxiliary agent contained in the positive electrode and the conductive auxiliary agent contained in the coating layer is preferably less than 4% by weight, more preferably less than 3% by weight, based on the weight of the positive electrode active material layer excluding the electrolyte solution. On the other hand, the total content of the conductive auxiliary agent contained in the positive electrode and the conductive auxiliary agent contained in the coating layer is preferably 2.5% by weight or more based on the weight of the electrolyte solution excluding the positive electrode active material layer.

The positive electrode active material layer preferably does not contain a binding agent.

Incidentally, as used herein, the binding agent means a chemical agent incapable of reversibly fixing the positive electrode active material particles to each other and reversibly fixing the positive electrode active material particle to the positive electrode current collector, and examples of the binding agent include known solvent drying type binding agent for a lithium-ion battery such as starch, polyvinylidene fluoride, polyvinyl alcohol, carboxymethyl cellulose, polyvinylpyrrolidone, tetrafluoroethylene, styrene-butadiene rubber, polyethylene, and polypropylene. These binding agents are used by being dissolved or dispersed in a solvent, and when the solvent is volatilized and distilled off, the binding agents become solid, and thus reversibly fix the positive electrode active material particles to each other and the positive electrode active material particle to the positive electrode current collector.

The positive electrode active material layer may contain an adhesive resin.

The adhesive resin means a resin having adhesiveness that does not become solid even when a solvent component is volatilized and dried, and is a different material from the binder thus distinguished.

Further, the coating layer constituting the coated positive electrode active material particles is fixed to each of the surfaces of the positive electrode active material particles, whereas the adhesive resin irreversibly fixes the surfaces of positive electrode active material particles to each other.

The adhesive resin can be easily separated from the surfaces of the positive electrode active material particles, however, the coating layer cannot be easily separated. Therefore, the above-described coating layer and the above-described adhesive resin are different materials.

Examples of the adhesive resin include that contains at least one low Tg mom selected from the group consisting of vinyl acetate, 2-ethylhexyl acrylate, 2-ethylhexyl methylate, butyl acrylate and butyl methacryllate as essential constituent monomers, the total weight percent of the above low Tg mom being 45% by weight or more based on the total weight of the constituent monomers.

When using an adhesive resin, it is preferable to use an adhesive resin of 0.01 to 10% by weight with respect to the total weight of the positive electrode active material particles.

In a first aspect of the positive electrode for a lithium-ion battery, the weight percent of the polymer compound contained in the positive electrode for a lithium-ion battery is 1 to 10 % by weight based on the weight of the positive electrode for a lithium-ion battery.

Here, the "polymer compound" means the polymer compound constituting the coating layer, a binding agent and adhesive resin. In the positive electrode for a lithium-ion battery, and the total weight percent of the polymer compound constituting the coating layer and the adhesive resin is equal to the "weight percent of the polymer compound" and does not include any binding agent at all (0 % by weight).

In a second aspect of the positive electrode for a lithium-ion battery, the positive electrode active material layer is consist of a non-bound body of the coated positive electrode active material particles for a lithium-ion battery.

Here, the non-bound body refers to means that the positions of the positive electrode active material particles in the positive electrode active material layer are not fixed, and the positive electrode active material particles are not irreversibly fixed with respect to each other, and the positive electrode active material particles and the current collector are not irreversibly fixed with respect to each other.

When the positive electrode active material layer is a non-bound body, the positive electrode active material particles are not irreversibly fixed with respect to each other. Thus, the positive electrode active material particles can be separated without fracture at the interface therebetween. This is preferable because the positive electrode active material layer can be prevented from being destroyed by the movement of the positive electrode active material particles even when the positive electrode active material layer is subjected to stress.

The positive electrode active material layer that is a non-bound body can be obtained by a method of using a slurry for positive electrode active material layer that contains the positive electrode active material particles and the electrolyte solution but does not contain the binding agent as the positive electrode active material layer.

A thickness of the positive electrode active material layer is preferably 150 to 600 $\mu$m, and more preferably 200 to 450 $\mu$m, from the viewpoint of battery performance.

The positive electrode for a lithium-ion battery can be produced by, for example, after applying the electrolyte solution containing the coated positive electrode active material particles, of the present invention, an electrolyte a solvent, and if necessary, a slurry for positive electrode active material layer containing a conductive auxiliary agent to a current collector, and drying the electrolyte solution and the slurry. Specifically, an example of the method is that, after applying the slurry for positive electrode active material layer on the current collector by a coating device such as a bar coater, the solvent is removed by allowing a non-woven cloth to stand on the positive electrode active material particles to absorb the solvent, and pressing by a press machine if necessary.

Examples of the material constituting the current collector include metal materials such as copper, aluminum, titan, stainless steel, nickel and alloys thereof, as well as calcined carbon, conductive polymer material, and conductive glass.

The shape of the current collector is not particularly limited, and may be a sheet-shaped current collector made of the above-mentioned material and a deposited layer made of fine particles composed of the above-mentioned material.

The thickness of the current collector is not particularly limited, but is preferably 50 to 500 $\mu$m.

The positive electrode for a lithium-ion battery is further provided with a current collector, and the positive electrode active material layer is preferably provided on the surface of the current collector. For example, the positive electrode for a lithium-ion battery is provided with a resin current collector consist of a conductive polymer material, and the positive electrode active material layer is preferably provided on the surface of the resin current collector described above.

As the conductive polymer material constituting the resin current collector, for example, a resin to which a conductive agent is added can be used.

As the conductive agent constituting the conductive polymer material, the same conductive auxiliary agent that is an optional component of the coating layer can be suitably used.

Examples of the resin constituting the conductive polymer material include polyethylene (PE), polypropylene (PP), polymethylpentene (PMP), polycycloolefin (PCO), polyethylene terephthalate (PET), polyether nitrile (PEN), polytetrafluoroethylene (PTFE), styrene butadiene rubber (SBR), polyacrylonitrile (PAN), polymethylacrylate (PMA), polymethylmethacrylate (PMMA), polyvinylidene fluoride (PVdF), an epoxy resin, a silicone resin, and a mixture thereof.

From the viewpoint of electrical stability, polyethylene (PE), polypropylene (PP), polymethylpentene (PMP), and polycycloolefin (PCO) are preferable, and polyethylene (PE), polypropylene (PP), and polymethylpentene (PMP) are more preferable.

The resin current collector can be obtained by known methods disclosed in Japanese Unexamined Patent Application, First Publication No. 2012-150905 and International Publication No. 2015/005116.

[Lithium-ion Battery]

The lithium-ion battery can be obtained by combining the positive electrode for a lithium-ion battery with the electrodes to be accommodated in a cell container together with a separator, injecting a electrolyte solution thereto, and sealing the cell container.

It is also possible to obtain the lithium-ion battery by forming a positive electrode on one surface of the current collector and forming a negative electrode on the other surface, thereby producing a bipolar electrode, injecting an electrolyte solution thereto, and sealing the cell container.

Examples of the separator include the above-mentioned known separator for a lithium-ion battery.

[Example 2]

<Production of Polymer Compound for Coating>

150.0 parts of DMF was placed in a four-necked flask equipped with a stirrer, a thermometer, a reflux condenser, a dropping funnel, and a nitrogen gas introduction tube, and the temperature was raised to 75°C. Next, a monomer composition blending 91 parts of acrylic acid, 9 parts of methyl methacrylate and 50 parts of DMF, and an **initiator solution obtained by dissolving 0.3 parts of 2,2'**-azobis(2-methylbutyronitrile) and 0.8 parts of 2,2'-azobis(2-methylbutyronitrile) in 30.0 parts of DMF were continuously added dropwise to the four-necked flask over 2 hours under stirring by using a dropping funnel, while blowing nitrogen thereinto, to carry out radical polymerization. After completion of the dropwise addition, the reaction was continued for 3 hours at 75°C. Then, the temperature was raised to 80°C and the reaction was continued for 3 hours to obtain a copolymer solution having a resin concentration of 30% by weight. The obtained copolymer solution was transferred to a Teflon (registered trade name) vat and dried under reduced pressure at 150°C and 0.01 MPa for 3 hours to distill off DMF, whereby a copolymer was obtained. The copolymer is crudely crushed by a hammer, and then was further subjected to mortar pulverization in a mortar to obtain powdery polymer compound for coating.

<Preparation of Electrolyte Solution>

LiN(FSO$_2$)$_2$ was dissolved at a ratio of 2.0 mol/L in a mixed solvent of ethylene carbonate (EC) and propylene carbonate (PC) (volume ratio 1:1), whereby an electrolyte solution was prepared.

<Example 2-1>

[Preparation of Coated Positive Electrode Active Material Particles A]

0.1 parts of polymer compound for coating was dissolved in 5.3 parts of DMF to obtain a polymer compound for coating solution.

84 parts of a positive electrode active material powder ($LiNi_{0.8}Co_{0.15}Al_{0.05}O_2$ powder, **volume average particle size: 4 $\mu$m) was placed in an all**-purpose mixer, High Speed Mixer FS25 [available from EARTHTECHNICA Co., Ltd.], and at room temperature and in a state of the powder being stirred at 720 rpm, 9 parts of a polymer compound for coating solution was added dropwise over 9 minutes, and then the resultant mixture was further stirred for 5 minutes.

Next, in a state of the resultant mixture being stirred, 3 parts of acetylene black [DENKA BLACK (registered trade name) available from Denka Company Limited] and 4 parts of glass ceramic particles (trade name "Lithium Ion Conductive Glass-Ceramics LICGC (trade mark) Sintered Plate-01" [available from Ohara Inc.] were divisionally added as conducting additive in 2 minutes, and stirring was continued for 30 minutes. Then, the pressure was reduced to 0.01 MPa while maintaining the stirring, the temperature was subsequently raised to 140°C while maintaining the stirring and the degree of pressure reduction, and the stirring, the degree of pressure reduction, and the temperature were maintained for 8 hours to distill off the volatile matter.

The obtained powder was classified with a sieve having a mesh size of 200 $\mu$m to obtain a coated positive electrode active material A.

[Preparation of Resin Current Collector]

In a twin-screw extruder, 70 parts of polypropylene [trade name "SunAllomer PC500A" available from SunAllomer Ltd.,], 25 part of carbon nanotube [trade name "FloTube9000" available from CNano], and 5 parts of dispersant (trade name "Youmex 1001" available from Sanyo Chemical Industries, Ltd.,) were melt-kneaded under the condition of 200 rpm at 200° C to obtain a resin mixture. The resulting resin mixture was passed through a T-die film extruder, and then rolled and elongated, whereby, a 100-$\mu$m thick conductive film for resin current collector was obtained. Then, the resulting conductive film for resin current collector was cut to 17.0 cm $\times$ 17.0 cm and subjected to nickel deposition on one surface, and thereafter, a resin current collector with a terminal for current extraction (5 mm $\times$ 3 cm) connected was obtained.

[Preparation of Positive Electrode for a Lithium-ion Battery]

42 parts of an electrolytic solution and 4.2 parts of a carbon fiber [available from Osaka Gas Chemicals Co., Ltd., Donna Carbo Milled S-243: average fiber length: 500 $\mu$m; average fiber diameter: 13 $\mu$m; conductivity: 200 mS/cm] were mixed using a planetary stirring type mixing and kneading device {Awatori Rentaro [THINKY Corporation]} at 2,000 rpm for 5 minutes, subsequently 30 parts of the electrolyte solution and 206 parts of the coated positive electrode active material A were added, and then mixing was further carried out at 2,000 rpm for 2 minutes with Awatori Rentaro. Then, after 20 parts of the electrolyte solution was further added, stirring with Awatori Rentaro was carried out at 2,000 rpm for 1 minute, and after 2.3 parts of the electrolytic solution was further added, stirring with Awatori Rentaro was carried out for mixing at 2,000 rpm for 2 minutes, whereby a positive electrode active material slurry was prepared. The obtained positive electrode active material slurry was applied onto one surface of the resin current collector and pressed at a pressure of 1.4 MPa for about 10 seconds to prepare a positive electrode for a lithium-ion battery (16.2 mm $\times$ 16.2 mm) according to Example 2-1.

[Preparation of Lithium-ion Battery]

The resulting positive electrode was combined with a counter electrode Li metal via a separator (cell guard #3501) to prepare a laminated cell.

<Example 2-2>

[Preparation of Coated Positive Electrode Active Material Particles B]

Coated positive electrode active material particles B was obtained similar to Example 2-1 except that the glass ceramic particles were changed to lithium tetraborate (trade name "lithium tetraborate, anhydrous" [available from FUJIFILM Wako Pure Chemical Corporation]).

[Preparation of Lithium-ion Battery]

The positive electrode for a lithium-ion battery was prepared similar to Example 2-1 except that the coated positive electrode active material particles A was changed to the coated positive electrode active material particles B, whereby the lithium-ion battery was obtained.

<Example 2-3>

[Preparation of coated positive electrode active material particles C]

Coated positive electrode active material particles C was obtained similar to Example 2-1 except that the glass ceramic particles were changed to zinc oxide (item "ZnO" [Kanto Chemical Co., Inc.]).

[Preparation of Lithium-ion Battery]

The positive electrode for a lithium-ion battery is prepared similar to Example 2-1 except that the coated positive electrode active material particles A was changed to the coated positive electrode active material particles C, whereby the lithium-ion battery was obtained.

<Example 2-4>

[Preparation of Coated Positive Electrode Active Material Particles D]

Coated positive electrode active material particles D was obtained similar to Example 2-1 except that the glass ceramic particles were changed to aluminum oxide (item "$Al_2O_3$" [Kanto Chemical Co., Inc.]).

[Preparation of Lithium-ion Battery]

The positive electrode for a lithium-ion battery was prepared similar to Example 2-1 except that the coated positive electrode active material particles A was changed to the coated positive electrode active material particles D, whereby the lithium-ion battery was obtained.

<Example 2-5>

[Preparation of Coated Positive Electrode Active Material Particles E]

Coated positive electrode active material particles E was obtained similar to Example 2-1 except that the glass ceramic particles were changed to silicon dioxide (Item "$SiO_2$" [Kanto Chemical Co., Inc.]).

[Preparation of Lithium-ion Battery]

The positive electrode for a lithium-ion battery was prepared similar to Example 2-1 except that the coated positive electrode active material particles A was changed to the coated positive electrode active material particles E, whereby the lithium-ion battery was obtained.

<Reference Example 2-1>

[Preparation of Coated Positive Electrode Active Material Particles F]

Coated positive electrode active material particles F was obtained similar to Example 2-1 except that glass ceramic particles were not added.

[Preparation of Lithium-ion Battery]

The positive electrode for a lithium-ion battery was prepared similar to Example 2-1 except that the coated positive electrode active material particles A was changed to the coated positive electrode active material particles F, whereby the lithium-ion battery was obtained.

<Measurement of Internal Resistance>

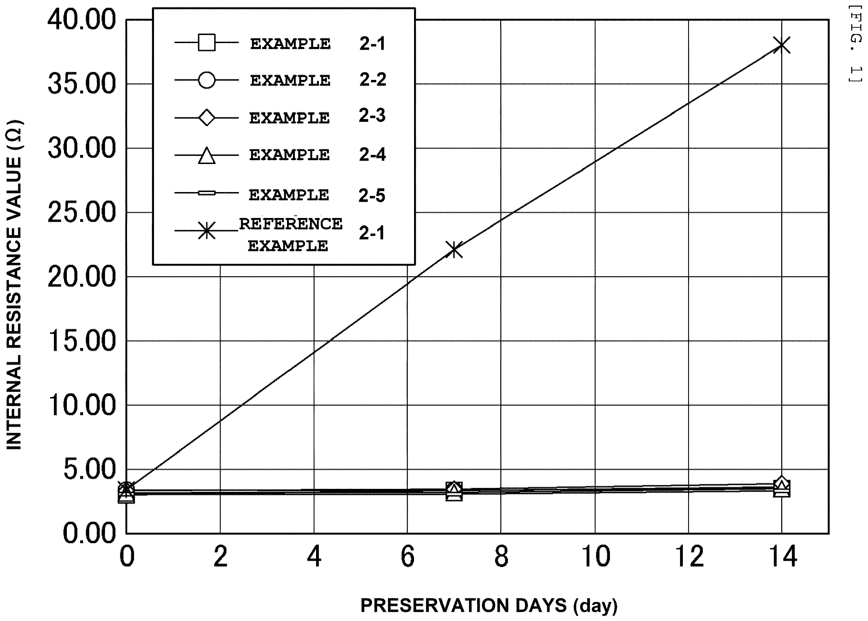

The lithium-ion batteries obtained in Examples and Reference Examples were charged and discharged once at 25°C. Then, the batteries were fully charged and stored at 60 °C. Internal resistance at a frequency of 1100 Hz was measured after 0 days (immediately after full charge), 7 days of storage and 14 days of storage using an impedance measurement device (available from Hioki E.E. Corporation, Chemical Impedance Analyzer IM3590).
The results thereof are shown in Table 2-1 and FIG. 1.

[Table 2-1]

|  | Internal resistance ($\Omega$) | | |
|---|---|---|---|
| Storage days | 0 | 7 | 14 |
| Example 2-1 | 2.99 | 3.36 | 3.51 |
| Example 2-2 | 3.39 | 3.34 | 3.63 |
| Example 2-3 | 3.33 | 3.44 | 3.87 |
| Example 2-4 | 3.16 | 3.18 | 3.48 |
| Example 2-5 | 3.04 | 3.05 | 3.32 |
| Reference Example 2-1 | 3.40 | 22.10 | 38.00 |

It was found from Table 2-1 and FIG. 1 that, in Examples 2-1 to 2-5, Increase in internal resistance of a lithium-ion battery can be prevented even after 14 days.

[Electrode for a Lithium-ion Battery]

Description will be made below as to an electrode for a lithium-ion battery.
Lithium-ion batteries have been widely used in various applications in recent years due to having the characteristics of high voltage and high energy density. Applications to hybrid vehicles and electric vehicles is also being considered, and it is required to further increase the capacity and output of secondary batteries for practical use.
In order to achieve increase in energy density of lithium-ion batteries, attention is paid to active materials with a larger theoretical capacity, that is, materials that can store more lithium ions per unit volume.
However, as the amount of lithium ions that can be occluded per unit volume increases, the volume change along with the insertion and desorption of lithium ions also increases.
A lithium-ion battery typically consists of a positive electrode current collector, a positive electrode active material layer, a separator, a negative electrode active material layer, and a negative electrode current collector.
In conventional lithium-ion batteries, since the positive electrode active material layer and the negative electrode active material layer (hereinafter collectively referred also to as the "electrode active material layer") are fixed with a binder, it could not be said that the flexibility is sufficiently high.
In particular, if the volume change occurs along with the insertion and desorption of lithium ions as described above, stress is applied to the electrode active material layer, and defects such as voids may occur inside the electrode active material layer due to distortion.
In some cases, such gaps or other defects may block the conductive path, which may Prevents the charge/discharge characteristics from being demonstrated.
JP2017-147222 A discloses an electrode active material layer being made as a non-bound body that is not fixed with a binder, thereby improving the flexibility of the electrode active material layer.
The invention disclosed in JP2017-147222 A is a lithium ion cell comprising a power generation part provided with a single cell obtained by stacking a positive electrode current collector, a positive electrode active material layer, a separator, a negative electrode active material layer, and a negative electrode current collector in the order, and an exterior cell container for accommodating the power generation part, wherein the positive electrode active material layer is a non-bound body of a positive electrode active material particle and the negative electrode active material layer is a non-bound body of a negative electrode active material particle, and the single cell has flexibility.
In the lithium-ion battery disclosed in JP2017-147222 A, the electrode active material layer is a non-bound body that is not fixed with binder, and thus can be deformed in accordance with the volume change of the electrode active material layer during charging and discharging, resulting in excellent electrode durability.
However, in the case of manufacturing the lithium-ion battery described in JP2017-147222 A, however, the electrode active material layer is not fixed with a binder, so that there has been a problem that, if an impact is generated upon carrying an electrode for a lithium-ion battery or assembling a lithium-ion battery, the impact destroys the electrode active material layer.

The electrode for a lithium-ion battery described below is an electrode for a lithium-ion battery consisting of an electrode active material layer containing coated electrode active material particles in which a coating layer containing a polymer compound at least partially covers a surface of the electrode active material particles and a conductive auxiliary agent, wherein the electrode active material layer is a non-bound body, and a support that supports the shape of the electrode active material layer is disposed inside the electrode active material layer.

The support is disposed inside the electrode active material layer that is a non-bound body, so that the electrode active material layer is less likely to break. Therefore, in the electrode for a lithium-ion battery, the electrode active material layer that is a non-bound body is less likely to be broken during transportation and assembly.

The detailed description as to the electrode for a lithium-ion battery will be made below.

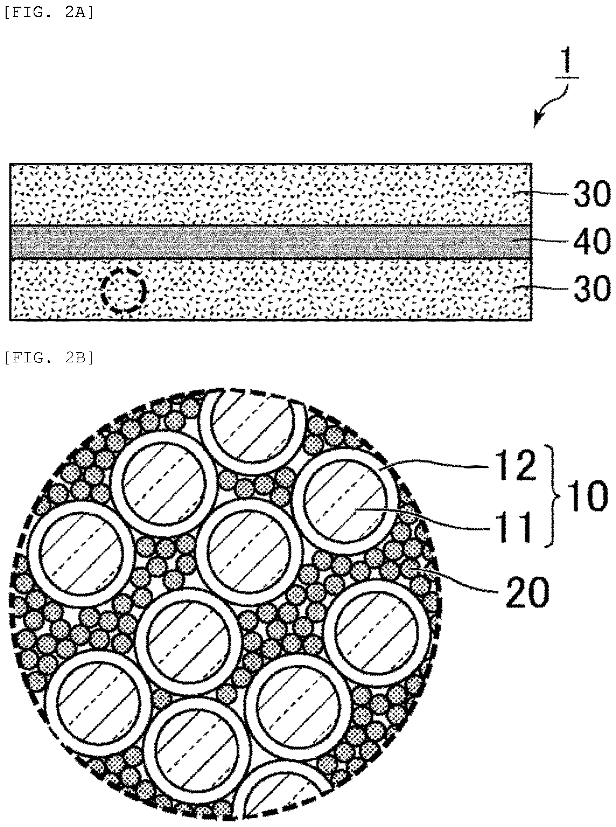

FIG. 2A is a cross-sectional view schematically showing an example of an electrode for a lithium-ion battery. FIG. 2B is an enlarged view of a broken line section in FIG. 2A. The electrode for a lithium-ion battery 1 shown in FIG. 2A and FIG. 2B includes an electrode active material layer 30 containing coated electrode active material particles 10 in which a coating layer 12 containing a polymer compound covers a surface of electrode active material particles 11 and a conductive auxiliary agent 20.

The electrode active material layer 30 is a non-bound body, and a support 40 that supports the shape of the electrode active material layer 30 is disposed inside the electrode active material layer

Incidentally, in the electrode for a lithium-ion battery 1, the support 40 is in a rod-like shape.

In the electrode for a lithium-ion battery, the electrode active material layer is a non-bound body.

The non-bound body refers to one in which a known binder (also called a battery binder) binds coated electrode active material particles to each other, the coated electrode active material particles and the conductive auxiliary agent, the coated electrode active material particles and the electrode current collector, and the conductive auxiliary agent and an electrode current collector.

The known binding agent is a known solvent dry type binding agent for a lithium-ion battery used for binding and fixing the coated electrode active material particles to each other, and the coated electrode active material particles and a current collector (starch, polyvinylidene fluoride, polyvinyl alcohol, carboxymethyl cellulose, polyvinylpyrrolidone, tetrafluoroethylene, styrene-butadiene rubber, polyethylene and polypropylene, etc.)

If the electrode active material layer is a non-bound body, in the lithium-ion battery to which the electrode for a lithium-ion battery is use, even if the electrode active material layer changes in volume due to charging and discharging, the electrode active material layer can be deformed according to the volume change, thereby improving durability.

Further, in the electrode for a lithium-ion battery, a support is disposed inside the electrode active material layer that is a non-bound body that supports the shape of the electrode active material layer.

Therefore, even if an impact occurs during transporting the electrode for a lithium-ion battery or during assembling the lithium-ion battery, the support acts as a support and the coated electrode active material particles that constitutes the electrode active material layer and the conductive auxiliary agent are less likely to move. As a result, it is possible to prevent the electrode active material layer from being broken.

If the support is merely on the surface of the electrode active material layer or in contact with it at a point, the above-described effect can hardly be obtained. Therefore, the support must be disposed inside the electrode active material layer.

As long as the support is disposed inside the electrode active material layer, the above-described effect can be obtained even if a part of the support is present outside the electrode active material layer.

In the electrode for a lithium-ion battery 1 shown in FIG. 2A, the support 40 is disposed in the center of the electrode active material layer, however, the location of the support in the for a lithium-ion battery electrode is not limited as long as the support is disposed inside the electrode active material layer.

Further, in the electrode for a lithium-ion battery 1 shown in FIG. 2A, the support 40 is in the form of single rod, however, in the electrode for a lithium-ion battery, the support may be in the form of multiple rods.

Further, the support 40 may be in the form of single thread or a plurality of threads. Furthermore, the support 40 may be in the form of woven or non-woven fabric, consisting of a plurality of threads.

The examples of other forms of the support for use in the electrode for a lithium-ion battery will be described below with drawings.

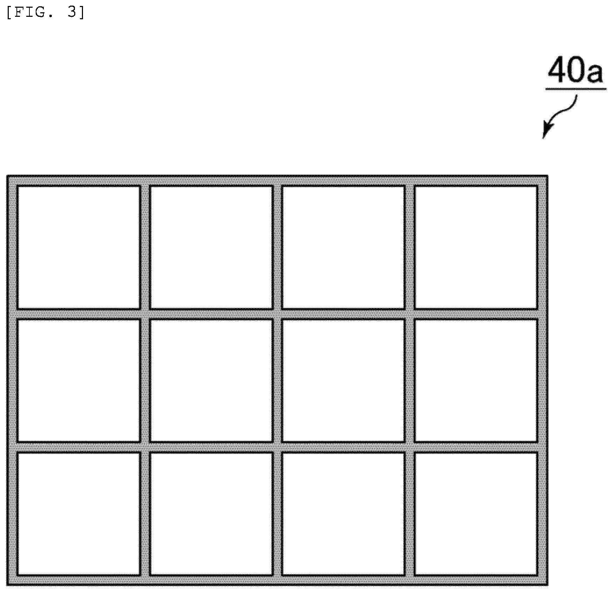

Figs. 3 to 7 are schematical diagrams each showing an example of a support for use in a lithium-ion battery electrode.

Further, as shown in FIG. 3, a support 40a of the electrode for a lithium-ion battery may be in the form of two-dimensional lattice.

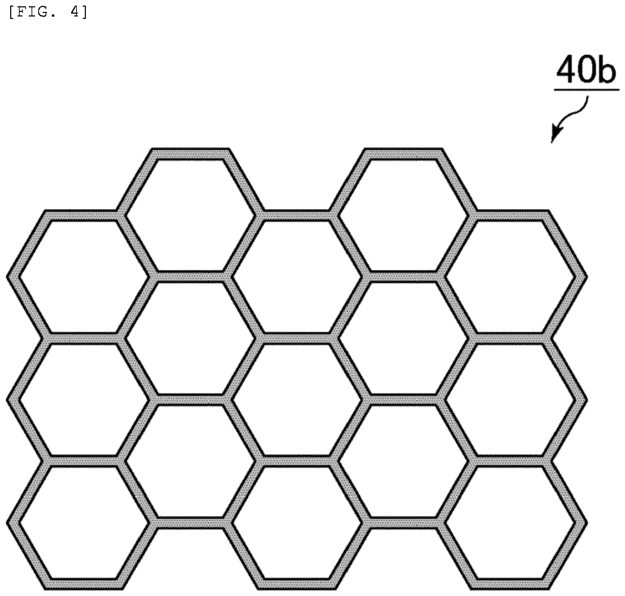

Further, as shown in FIG. 4, a support 40b of the electrode for a lithium-ion battery may be in the form of two-dimensional honeycomb.

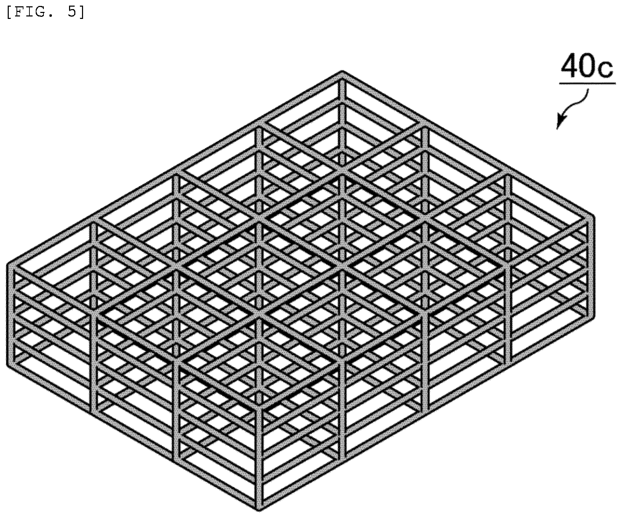

Further, as shown in FIG. 5, a support 40c of the electrode for a lithium-ion battery may be in the form of three-dimensional lattice.

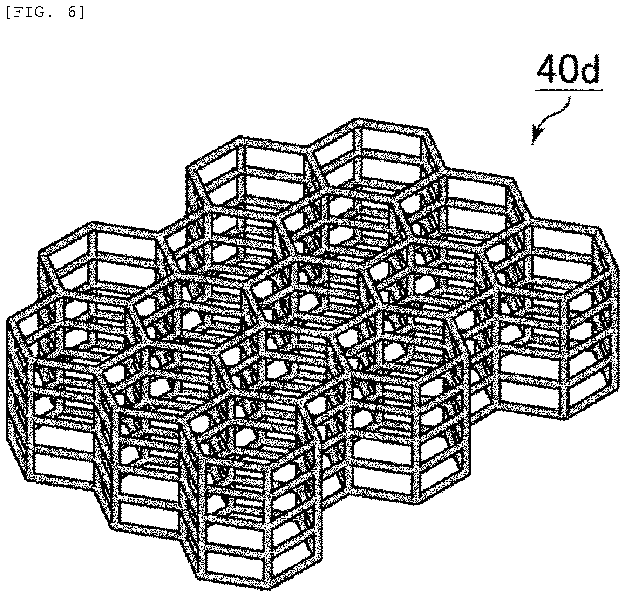

Further, as shown in FIG. 6, a support 40d of the electrode for a lithium-ion battery may be in the form of three-dimensional honeycomb.

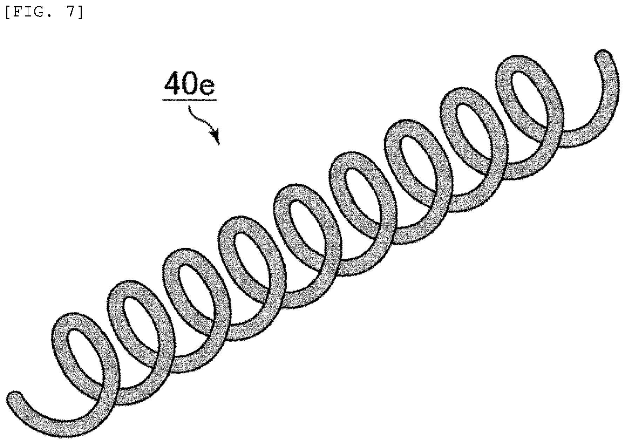

Further, as shown in FIG. 7, a support 40e of the electrode for a lithium-ion battery may be in the form of spiral.

The above-described effect can be obtained even if the support is in such a form.

The material of the support used for the electrode for a lithium-ion battery is not limited, but is preferably made of at least one selected from the group consisting of resin fiber, carbon fiber, rubber fiber, ceramic fiber, and glass fiber.

Examples of resin fiber include polyolefin fibers, fluoropolymer fibers, nylon fibers, polyetheretherketone resin fibers, aramid fibers, and polyester fibers.

In the electrode for a lithium-ion battery, the ratio of the volume of the support to the total volume of the electrode for a lithium-ion battery is preferable 0.01 to 3 0 %, and more preferably 1 to 10 %.

In a case where the ratio of the aforesaid volume is within the aforesaid range, the non-bound body is more difficult to break.

In a case where the ratio of the aforesaid volume is less than 0.01%, it is difficult to obtain the aforesaid effect.

In a case where the ratio of the aforesaid volume exceeds 30%, the ratio of electrode active material is reduced, resulting in reduction of the electric capacitance.

In the electrode for a lithium-ion battery, the electrode active material layer may be a positive electrode active material layer or a negative electrode active material layer.

In a case where the electrode active material layer is a positive electrode active material layer, the electrode for a lithium-ion battery is a positive electrode.

Further, in a case where the electrode active material layer is a negative electrode active material layer, the electrode for a lithium-ion battery is a negative electrode.

In a case of producing the lithium-ion battery using the electrode for a lithium-ion battery, an electrode for a lithium-ion battery whose electrode active material layer is a positive electrode active material layer may be used as a positive electrode, whereas an electrode for a lithium-ion battery whose electrode active material layer is a negative electrode active material layer may be used as a negative electrode.

In the case where the electrode active material layer is a positive electrode active material layer, the electrode active material particles constituting the positive electrode active material layer are the positive electrode active material particle.

Examples of the positive electrode active material particles include those explained in the coated positive electrode active material particles for a lithium-ion battery of the present invention.

In the case where the electrode active material layer is a negative electrode active material layer, the electrode active material particles constituting the negative electrode active material layer are the negative electrode active material particle.

Examples of the negative electrode active material particles include carbon-based materials [such as graphite, non-graphitizable carbon, amorphous carbon, and resin burned bodies (for example, burned and carbonized phenol resin, and furan resin), cokes (for example, pitch coke, needle coke, and petroleum coke), and carbon fiber], silicon-based materials [such as silicon, silicon oxide (SiOx), silicon-carbon complexes (such as complexes in which the surfaces of carbon particles are coated with silicon and/or silicon carbide, complexes in which the surfaces of silicon particles or silicon oxide particles are coated with carbon and/or silicon carbide, and silicon carbide), silicon alloys (such as a silicon-aluminum alloy, a silicon-lithium alloy, a silicon-nickel alloy, a silicon-iron alloy, a silicon-titanium alloy, a silicon-manganese alloy, a silicon-copper alloy, and a silicon-tin alloy), and the like], conductive polymers (for example, polyacetylene, and polypyrrole), metals (such as tin, aluminum, zirconium, and titanium), metal oxides (such as titanium oxide and lithium-titanium oxide), and metal alloys (for example, a lithium-tin alloy, a lithium-aluminum alloy, and a lithium-aluminum-manganese alloy), and mixtures thereof with carbon-based materials. Among the above-described negative electrode active material particles, those that do not contain lithium or lithium ions therein may be subjected to a pre-doping treatment in which a part or all of the negative electrode active material particles are pre-doped with lithium or lithium ions in advance.

Among these, from the viewpoint of battery capacity, or the like, the carbon-based materials, the silicon-based materials, and the mixtures thereof are preferable, as the carbon-based material, graphite, non-graphitizable carbon, and amorphous carbon are more preferable, and as the silicon-based material, silicon oxide and silicon-carbon complexes are even more preferable.

The volume average particle diameter of the negative electrode active material particles is preferably 0.01 to 100 $\mu$m, more preferably 0.1 to 20 $\mu$m, and even more preferably 2 to 10 $\mu$m from the viewpoint of electric properties of the battery.

Specifically, the electrode for a lithium-ion battery may be any one of those listed below.

- A positive electrode for a lithium-ion battery consisting of coated positive electrode active material particles in which a coating layer containing a polymer compound at least partially covers a surface of the positive electrode active material particles and a conductive auxiliary agent, wherein the positive electrode active material layer is a non-bound body, and the positive electrode active material layer has a support inside thereof that supports the shape of the positive electrode active material layer.

- A negative electrode for a lithium-ion battery consisting of coated negative electrode active material particles in which a coating layer containing a polymer compound at least partially covers a surface of the negative electrode active material particles and a conductive auxiliary agent, wherein the negative electrode active material layer is a non-bound body, and the negative electrode active material layer has a support inside thereof that supports the shape of the negative electrode active material layer.

The electrode active material layer of the electrode for a lithium-ion battery includes coated electrode active material particles in which a coating layer containing a polymer compound at least partially covers a surface of the electrode active material particles.

In a case where the surface of each of the electrode active material particles is coated with a coating layer containing polymer compound, the volume change of the electrode active material particles is alleviated.

Examples of the polymer compound include an acrylic resin, a fluor resin, a polyester resin, a polyether resin, a vinyl resin, a urethane resin, a polyamide resin, an epoxy resin, a polyimide resin, a silicone resin, a phenol resin, a melamine resin, a urea resin, a aniline resin, an ionomer resin, polycarbonate, polysaccharides (such as sodium alginate), and a mixture thereof.

Among these, a fluor resin, a polyester resin, a polyether resin, a vinyl resin, a urethane resin, a polyamide resin and a mixture thereof are preferable, and a vinyl resin is more preferable, from the viewpoint of wettability to and liquid absorption of an electrolyte solution.

The urethane resin above is preferably a urethane resin (A3) obtained by reacting an active hydrogen component (a3-1) and an isocyanate component (a3-2).

In a case where the electrode active material particles are coated with the urethane resin (A3), the volume change of the electrode can be alleviated and the expansion of the electrode can be suppressed since the urethane resin (A3) has flexibility.

It is preferable that the active hydrogen component (a3-1) contains at least one selected from the group consisting of a polyether diol, a polycarbonate diol, and a polyester diol.

Examples of the polyether diol include a polyoxyethylene glycol (hereinafter, abbreviated as PEG), a polyoxyethylene oxypropylene block copolymer diol, and a polyoxyethylene oxytetramethylene block copolymer diol, an ethylene oxide adduct of a low molecular weight glycol such as ethylene glycol, propylene glycol, 1,4-butanediol, 1,6-hexamethylene glycol, neopentyl glycol, bis(hydroxymethyl)cyclohexane, 4,4'-bis(2-hydroxyethoxy)-diphenylpropane, a condensed polyether ester diol obtained by reacting PEG having a number average molecular weight of 2,000 or less with one or more of C4-C10 dicarboxylic acids [an aliphatic dicarboxylic acid (for example, succinic acid, adipic acid, or sebacic acid), a C8-C15 aromatic dicarboxylic acid (for example, terephthalic acid or isophthalic acid), and the like], and a mixture of two or more thereof.

Among these, PEG, a polyoxyethylene oxypropylene block copolymer diol, or a polyoxyethylene oxytetramethylene block copolymer diol is preferable, and PEG is particularly preferable.

Examples of the polycarbonate diol include a polycarbonate polyol (for example, a polyhexamethylene carbonate diol) that is produced by carrying out condensation while carrying out a dealcoholization reaction, from one or more alkylene diols having an alkylene group having 4 to 12 carbon atoms, preferably 6 to 10 carbon atoms, and more preferably 6 to 9 carbon atoms, and a low molecular weight carbonate compound (for example, C1-C6 dialkyl carbonate of alkyl group, an alkylene carbonate having a C2-C6 alkylene group, or a diaryl carbonate having a C6-C9 aryl group).

Examples of the polyester diol include a condensed polyester diol obtained by reacting a low molecular weight diol and/or a polyether diol having a number average molecular weight of 1,000 or less with one or more dicarboxylic acids described above, and a polylactone diol obtained by the ring-opening polymerization of a C4-C12 lactone. Examples of the low molecular weight diol include the low molecular weight glycols exemplified in the section of the polyether diol described above. Examples of the polyether diol having a number average molecular weight of 1,000 or less include polyoxypropylene glycol and PTMG. Examples of the lactone include ε-caprolactone and γ-valerolactone. Specific examples of the polyester diol include a polyethylene adipate diol, a polybutylene adipate diol, a polyneopentylene adipate diol, a poly(3-methyl-1,5-pentylene adipate)diol, a polyhexamethylene adipate diol, a polycaprolactone diol, and a mixture of two or more thereof.

As the isocyanate component (a2), an isocyanate component that is conventionally used in polyurethane production can be used. Such an isocyanate include a C6-C20 aromatic diisocyanate (excluding a carbon atom in the NCO group, the same applies hereinafter), a C2-C18 aliphatic diisocyanate, a C4-C15 alicyclic diisocyanate, a C8-C15 aromatic aliphatic diisocyanate, a modified product of these diisocyanates (a carbodiimide modified product, a urethane modified product, a uretdione modified product, and the like.), and a mixture of two or more thereof.

Specific examples of the aromatic diisocyanate include 1,3- or 1,4-phenylene diisocyanate, 2,4- or 2,6-tolylene diisocyanate, 2,4'-or 4,4'-diphenylmethane diisocyanate (hereinafter, diphenylmethane diisocyanate is abbreviated as MDI), 4,4'-diisocyanato biphenyl, 3,3'-dimethyl-4,4'-diisocyanato biphenyl, 3,3'-dimethyl-4,4'-diisocyanato diphenylmethane, and 1,5-naphthylene diisocyanate.

Specific examples of the aliphatic diisocyanate include ethylene diisocyanate, tetramethylene diisocyanate, hexamethylene diisocyanate, dodecamethylene diisocyanate, 2,2,4-trimethylhexamethylene diisocyanate, lysine diisocyanate, 2,6-diisocyanatomethyl caproate, bis(2-isocyanatoethyl)carbonate, and 2-isocyanatoethyl-2,6-diisocyanatohexanoate.

Specific examples of the alicyclic diisocyanate include isophorone diisocyanate, dicyclohexylmethane-4,4'-diisocyanate, cyclohexylene diisocyanate, methylcyclohexylene diisocyanate, bis(2-isocyanatoethyl)-4-cyclohexylene-1,2-dicarboxylate, and 2,5- or 2,6-norbornane diisocyanate.

Specific examples of the aromatic aliphatic diisocyanate include m- or p-xylylene diisocyanate and $\alpha,\alpha,\alpha',\alpha'$-tetramethylxylylene diisocyanate.

Among these, an aromatic diisocyanate or an alicyclic diisocyanate is preferable, an aromatic diisocyanate is more preferable, and MDI is particularly preferable.

In a case where the urethane resin (A) contains a polymer diol (a3-11) and the isocyanate component (a3-2), the equivalent ratio of (a3-2)/(a3-11) is preferably 10 to 30/1 and more preferably 11 to 28/1. In a case where the ratio of the isocyanate component (a3-2) is more than 30 equivalents, a hard coating is formed.

The number average molecular weight of the urethane resin (A3) is preferably 40,000 to 500,000 and more preferably 50,000 to 400,000.

In a case where the number average molecular weight of the urethane resin (A3) is less than 40,000, the hardness of the coating is low, and in a case of being more than 500,000, the solution viscosity is high, and thus a uniform coating film may not be obtained.

The number average molecular weight of the urethane resin (A3) is measured by gel permeation chromatography (hereinafter, abbreviated as GPC) using dimethylformamide (hereinafter, abbreviated as DMF) as a solvent and polyoxypropylene glycol as a standard substance. The sample concentration may be 0.25% by weight, each of TSKgel SuperH2000, TSKgel SuperH3000, and TSKgel SuperH4000 (all available from Tosoh Corporation) is connected as the column stationary phase, and the column temperature may be 40°C.

The urethane resin (A3) can be produced by reacting the active hydrogen component (a3-11) with the isocyanate component (a3-2).

Examples of the production method therefor include an one-shot method in which the isocyanate component (a3-2), the polymer diol (a3-11), and a chain extender (a3-13) are reacted at the same time, where the polymer diol (a3-11) and the chain extender (a3-13) are used as the active hydrogen component (a3-1), and a prepolymer method in which, first, the polymer diol (a3-11) is reacted with the isocyanate component (a3-2), and then the chain extender (a3-13) is subsequently reacted.

Further, the urethane resin (A3) can be produced in the presence or include an amide-based solvent [DMF, dimethylacetamide, and the like.], a sulfoxide-based solvent (dimethyl sulfoxide and the like.), a ketone-based solvent [methyl ethyl ketone, methyl isobutyl ketone, and the like.], an aromatic solvent (toluene, xylene, and the like.), an ether-based solvent (dioxane, tetrahydrofuran, and the like.), an ester-based solvent (ethyl acetate, butyl acetate, and the like.), and a mixture of two or more thereof. Among these, the preferred one is an amide-based solvent, a ketone-based solvent, an aromatic solvent, or a mixture of two or more thereof.

The reaction temperature in the production of the urethane resin (A3) is preferably 20°C to 100°C in a case where a solvent is used and 20°C to 220°C in a case where no solvent is used.

The urethane resin (A3) can be produced with a production apparatus that is generally used in the related industry. In a case where a solvent is not used, a production apparatus such as a kneader or an extruder can be used. The urethane resin (A3) produced in this manner has a solution viscosity of generally 10 to 10,000 poise/20°C in a case of being measured as a 30% by weight (solid content) DMF solution and is practically preferably 100 to 2,000 poise/20°C.

It is desirable that the vinyl resin contains a polymer (B3) containing a vinyl monomer (b3) as an essential constituent monomer.

In a case where the positive electrode active material particle is coated with the polymer (B3), the volume change of the electrode can be alleviated and the expansion of the electrode can be suppressed since the polymer (B3) containing the vinyl monomer (b3) as an essential constituent monomer has flexibility.

In particular, it is desirable that a vinyl monomer (b3-1) having a carboxyl group and a vinyl monomer (b3-2) represented by General Formula (3-1) are contained as the vinyl monomer (b3).

$$CH2=C(R^1)COOR^2 \qquad (3-1)$$

[In General Formula (3-1), $R^1$ is a hydrogen atom or a methyl group, and $R^2$ is a C4-C36 branched alkyl group.]

Examples of the vinyl monomer (b3-1) having a carboxyl group include a C3-C15 monocarboxylic acid, such as (meth)acrylic acid, crotonic acid, or cinnamic acid; a C4-C24 dicarboxylic acid, such as (anhydrous) maleic acid, fumaric acid, or (anhydrous) itaconic acid, citraconic acid, and measaconic acid; and a trivalent, tetravalent, or C6-C24 higher valent polycarboxylic acid, such as aconitic acid. Among these, (meth)acrylic acid is preferable and methacrylic acid is particularly preferable.

In the vinyl monomer (b3-2) represented by General Formula (3-1), $R^1$ represents a hydrogen atom or a methyl group. $R^1$ is preferably a methyl group.

$R^2$ is a C4-C36 branched alkyl group. Specific examples of $R^2$ include 1-alkylalkyl groups (e.g., 1-methylpropyl (sec-butyl), 1,1-dimethylethyl (tert-butyl), 1-methylbutyl, 1-ethylpropyl, 1,1-dimethylpropyl, 1-methylpentyl, 1-ethylbutyl, 1-methylhexyl, 1-ethylpentyl, 1-methylheptyl, 1-ethylhexyl, 1-methyloctyl, 1-ethylheptyl, 1-methylnonyl, 1-ethyloctyl, 1-methyldecyl, 1-ethylnonyl, 1-butyleicosyl, 1-hexyloctadecyl, 1-octyihexadecyl, 1-decyltetradecyl, and 1-undecyltridecyl groups); 2-alkylalkyl groups (e.g., 2-methylpropyl (iso-butyl), 2-methylbutyl, 2-ethylpropyl, 2,2-dimethylpropyl, 2-methylpentyl, 2-ethylbutyl, 2-methylhexyl, 2-ethylpentyl, 2-methylheptyl, 2-ethylhexyl, 2-methyloctyl, 2-ethylheptyl, 2-methylnonyl, 2-ethyloctyl, 2-methyldecyl, 2-ethylnonyl, 2-hexyloctadecyl, 2-octyihexadecyl, 2-decyltetradecyl, 2-undecyltridecyl, 2-dodecylhexadecyl, 2-tridecylpentadecyl, 2-decyloctadecyl, 2-tetradecyloctadecyl, 2-hexadecyloctadecyl, 2-tetradecyleicosyl, and 2-hexadecyleicosyl groups); 3 to 34-alkylalkyl groups (e.g., 3-alkylalkyl, 4-alkylalkyl, 5-alkylalkyl, 32-alkylalkyl, 33-alkylalkyl, and 34-alkylalkyl groups); mixed alkyl groups containing one or more branched alkyl groups such as alkyl residues of oxo alcohols corresponding to propylene oligomers (from heptamer to undecamer), ethylene/propylene (molar ratio of 16/1 to 1/11) oligomers, isobutylene oligomers (from heptamer to octamer), and α-olefin (C5-C20) oligomers (from tetramer to octamer). Among these, a 2-alkylalkyl group is preferable, and a 2-ethylhexyl group or a 2-decyltetradecyl group is more preferable, from the viewpoint of liquid absorption of an electrolyte solution.

The preferred lower limit of the number average molecular weight of the polymer (B3) is 3,000, more preferably 50,000, particularly preferably 100,000, and most preferably 200,000, and the preferred upper limit thereof is 2,000,000, more preferably 1,500,000, particularly preferably 1,000,000, and most preferably 800,000.

The number average molecular weight of the polymer (B3) can be measured by GPC measured under the following conditions.

Device: Alliance GPC V2000 (Waters Corporation)
Solvent: ortho-dichlorobenzene
Standard substance: polystyrene
Sample concentration: 3 mg/ml
Column solid phase: PLgel 10 μm, MIXED-B, two columns connected in series
(Polymer Laboratories Limited)
Column temperature: 135 °C

The polymer (B3) can be produced by a known polymerization method (bulk polymerization, solution polymerization, emulsion polymerization, suspension polymerization, and the like.).

In the polymerization, a known polymerization initiator [an azo-based initiator [2,2'-azobis(2-methylpropionitrile), 2,2'-azobis(2,4-dimethylvaleronitrile, and the like.), a peroxide-based initiator (benzoyl peroxide, di-t-butyl peroxide, lauryl peroxide, and the like.)], and the like.] can be used.

The amount of the polymerization initiator to be used is preferably 0.01% to 5% by weight, more preferably 0.05% to 2% by weight, based on the total weight of the monomers.

Examples of the solvents to be used in the solution polymerization include an ester (C2-C8, for example, ethyl acetate or butyl acetate), an alcohol (C1-C8, for example, methanol, ethanol, or octanol), a hydrocarbon (C4-C8, for example, n-butane, cyclohexane, or toluene), an amide (for example, DMF or dimethylacetamide) and a ketone (C3-C9, for example, methylethylketone), and the amount to be used is 5% to 900% and preferably 10% to 400% based on the total weight of the monomers, and the monomer concentration is 10% to 95% by weight and preferably 20% to 90% by weight.

Examples of the dispersion medium in the emulsification polymerization and the suspension polymerization include water, an alcohol (for example, ethanol), an ester (for example, ethyl propionate), and light naphtha, and examples of the emulsifying agent include a higher fatty acid (C10-C24) metal salt (for example, sodium oleate or sodium stearate), a higher alcohol (C10-C24) sulfate ester metal salt (for example, sodium lauryl sulfate), an ethoxylated tetramethyl decinediol, and sodium sulfoethyl methacrylate, dimethylaminomethyl methacrylate. Further, polyvinyl alcohol, a polyvinyl pyrrolidone, and the like. may be added as a stabilizer.

The monomer concentration of the solution or dispersion liquid is 5% to 95% by weight, the amount of polymerization initiator to be used is 0.01% to 5% based on the total weight of the monomers, and preferably 0.05% to 2% from the viewpoints of adhesive force and cohesive force.

In the polymerization, a known chain transfer agent such as a mercapto compound (dodecyl mercaptan, n-butyl mercaptan, and the like.) and a halogenated hydrocarbon (carbon tetrachloride, carbon tetrabromide, benzyl chloride, and the like.) can be used. From the viewpoints of adhesive force and cohesive force, the amount to be used is 2% or less and preferably 0.5% or less based on the total weight of the monomers.

The temperature inside the system in the polymerization reaction is -5°C to 150°C and preferably 30°C to 120°C, the reaction time is 0.1 to 50 hours and preferably 2 to 24 hours. The end point of the reaction can be confirmed by the amount of the unreacted monomers being 5% by weight or less and preferably 1% by weight or less of the total amount of the monomers used.

In the electrode for a lithium-ion battery, the weight percent of the polymer compound based on the coated electrode active material particles is preferably 1% to 20% by weight and more preferably 2% to 7% by weight from the viewpoint of formability and resistance value.

In the case where the electrode for a lithium-ion battery is a positive electrode, the coated positive electrode active material particles of the invention described above may be used as the coated positive electrode active material particles.

The electrode active material layer of the electrode for a lithium-ion battery contains a conductive auxiliary agent. The conductive auxiliary agent may be contained in any one of the coating layer of the coated electrode active material particles and the electrode active material layer, or contained in both the coating layer and the electrode active material layer.

Examples of the conductive auxiliary agent include, but not limited to, those explained in the coated positive electrode active material particles for a lithium-ion battery of the present inventio.

The average particle size of the conductive auxiliary agent is not particularly limited; however, it is preferably 0.01 to 10 $\mu$m, more preferably 0.02 to 5 $\mu$m, and still more preferably 0.03 to 1 $\mu$m, from the viewpoint of the electrical characteristics of the battery.

In the electrode for a lithium-ion battery, the electrode active material layer。 may contain an adhesive resin.

As the adhesive resin, it is possible to suitably use, for example, a resin obtained by mixing the non-aqueous secondary battery active material coating resin, described in Japanese Unexamined Patent Application, First Publication No. 2017-054703, with a small amount of an organic solvent and adjusting the glass transition temperature thereof to room temperature or lower, and those described as adhesives in Japanese Unexamined Patent Application, First Publication No. H10-255805.

In the electrode for a lithium-ion battery, the thickness of the electrode active material layer is not particularly limited, and is preferably 150 to 600 $\mu$m, and more preferably 200 to 450 $\mu$m from the viewpoint of battery performance.

The electrode for a lithium-ion battery may contain an electrolyte solution. Examples of the electrolytic solution include those containing an electrolyte and a non-aqueous solvent.

As the electrolyte, ones used for known electrolytic solutions, and the like can be used, and examples of the electrolyte include inorganic acid lithium salts such as $LiPF_6$, $LiBF_4$, $LiSbF_6$, $LiAsF_6$, $LiN(FSO_2)_2$ and $LiClO_4$, and organic acid lithium salts such as $LiN(CF_3SO_2)_2$, $LiN(C_2F_5SO_2)_2$ and $LiC(CF_3SO_2)_3$, and $LiN(FSO_2)_2$ is preferable.

The electrolyte concentration of the electrolytic solution is not particularly limited, and is preferably 0.5 to 5 mol/L, more preferably 0.8 to 4 mol/L, and even more preferably 1 to 2 mol/L.

As the non-aqueous solvent, ones used for known electrolytic solutions, and the like can be used, and for example, a lactone compound, a cyclic or chain carbonic acid ester, a chain carboxylic acid ester, a cyclic or chain ether, a phosphoric acid ester, a nitrile compound, an amide compound, a sulfone, a sulfolane, and the like and mixtures thereof can be used. One kind of non-aqueous solvent may be used alone, or two or more kinds thereof may be used in combination.

Among the non-aqueous solvents, the lactone compound, the cyclic carbonic acid ester, the chain carbonic acid ester, and the phosphoric acid ester are preferable from the viewpoint of battery output and charge-discharge cycle characteristics, the lactone compound, the cyclic carbonic acid ester, and the chain carbonic acid ester are more preferable, and a liquid mixture of the cyclic carbonic acid ester and the chain carbonic acid ester is particularly preferable. A liquid mixture of the ethylene carbonate (EC) and the dimethyl carbonate (DMC), or a liquid mixture of the ethylene carbonate (EC) and the propylene carbonate (PC) is most preferable.

Next, the description will be made as to the electrode for a lithium-ion battery and the production method of a lithium-ion battery using the electrode for a lithium-ion battery.

(1) Supply Step

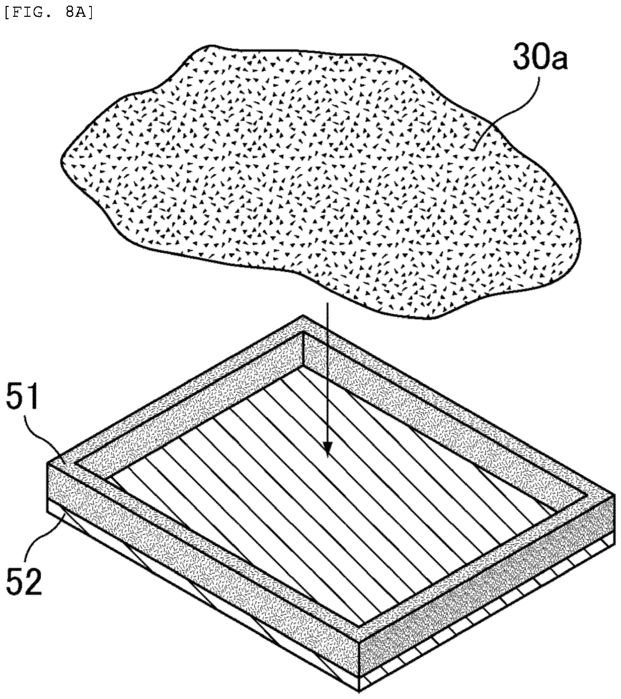

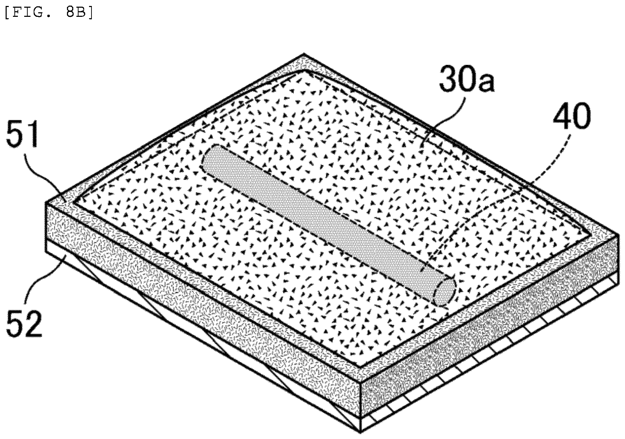

Figs. 8A and 8B are perspective views each schematically showing an example of the supply step.

First, as shown in FIG. 8a, an electrode active material composition 30a containing coated electrode active material particles and a conductive auxiliary agent is supplied to a space covered by a sealing material 51 and a bottom member 52.

At this time, as shown in FIG. 8b, a support 40 is placed inside the electrode active material composition 30a.

The bottom member 52 may be a release material or an electrode current collector, but the bottom member 52 is preferably an electrode current collector.

(2) Compression Step

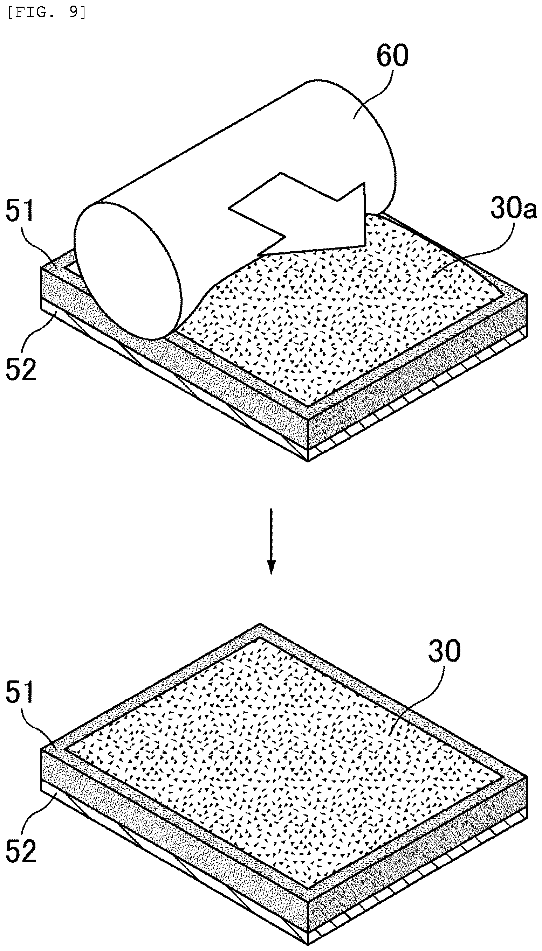

FIG. 9 is a perspective view schematically showing an example of the compression step. Next, as shown in FIG. 9, the electrode active material layer 30 is formed by compression by means of a compressor 60.

The electrode active material layer 30 becomes a positive electrode active material layer in the case where the above-mentioned positive electrode active material composition is compressed by the compressor 60, and becomes a negative electrode active material layer in the case where the above-mentioned negative electrode active material composition is compressed by the compressor 60.

The speed of compression in the compression step is not particularly limited, and can be appropriately set to a speed at which the bottom member 52 and the electrode active material layer 30 are not bent or wrinkled. For example, in the case where the compressor 60 is a roll press machine, the rotation speed of the roll is preferably 1 to 20 m/min from the viewpoint of maintaining a sufficient compression holding time.

The linear pressure applied to the electrode active material composition 30a by the compressor 60 is preferably 35 to 3500 N/cm.

The linear pressure applied to the electrode active material composition 30a by the compressor 60 means the linear pressure calculated from the load obtained by a load cell attached to the compressor 60 and the thickness of the electrode active material layer after compression.

The electrode for a lithium-ion battery can be obtained through these steps.

(3) Recovery Step

In the case where the mask material is arranged on the surface of the sealing material 51, it is preferable to provide a recovery step of recovering the mask material and the electrode active material composition 30a spilled on the mask material after the supply step and the compression step.

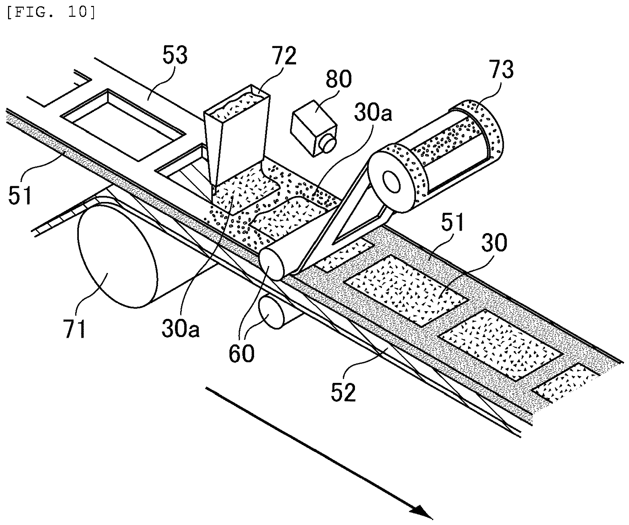

FIG. 10 is a perspective view schematically showing an example of a recovery step.

As shown in FIG. 10, the sealing material 51 in which a mask material 53 is arranged on the surface and the bottom member 52 are transported by transport means 71 in one direction (in FIG. 10, a direction indicated by the arrow), and the electrode active material composition 30a is supplied by supply means 72 to the space surrounded by the sealing material 51 and the bottom member 52. The electrode active material composition 30a supplied by the supply means 72 is compressed by the compressor 60 to form the electrode active material layer 30. Thereafter, the mask material 53 arranged on the surface of the sealing material 51 is separated from the sealing material 51 by recovery means 73, and is recovered together with the electrode active material composition 30a spilled on the mask material 53. The recovered electrode active material composition 30a can be reused.

Further, by measuring the state (scattering condition) of the electrode active material composition 30a on the mask material 53 with a camera 80 or the like, the result can be fed back to the supply step and the compression step.

The recovery step may or may not be performed continuously with the supply step, the compression step, and the combination step.

In the present specification, the electrode active material composition 30a spilled on the mask material 53 during the supply step and the compression step is referred to as the electrode active material composition 30a even after the compression step.

(4) Transfer Step

The electrode active material layer 30 formed in the (2) Compression Step above is transferred from the bottom member 52 to the electrode current collector.

In the transfer step, for example, in the case where the bottom member 52 is a release material, the electrode active material layer 30 may be transferred from the bottom member 52 to electrode current collector.

Further, in the case where the bottom member 52 is an electrode current collector, a new electrode can be obtained by transferring the electrode active material layer 30 from the bottom member 52, which is an electrode current collector, to another electrode current collector.

The transfer step is not particularly limited, and a known transfer method can be used. Specifically, the electrode active material layer 30 may be overlapped on the electrode current collector, followed by performing heating or pressurizing, and then peeling off the bottom member 52.

(5) Combination Step

A lithium-ion battery can be produced by combining the electrode for a lithium-ion battery that is disposed in the electrode current collector with an electrode to be a pair thereof via a separator.

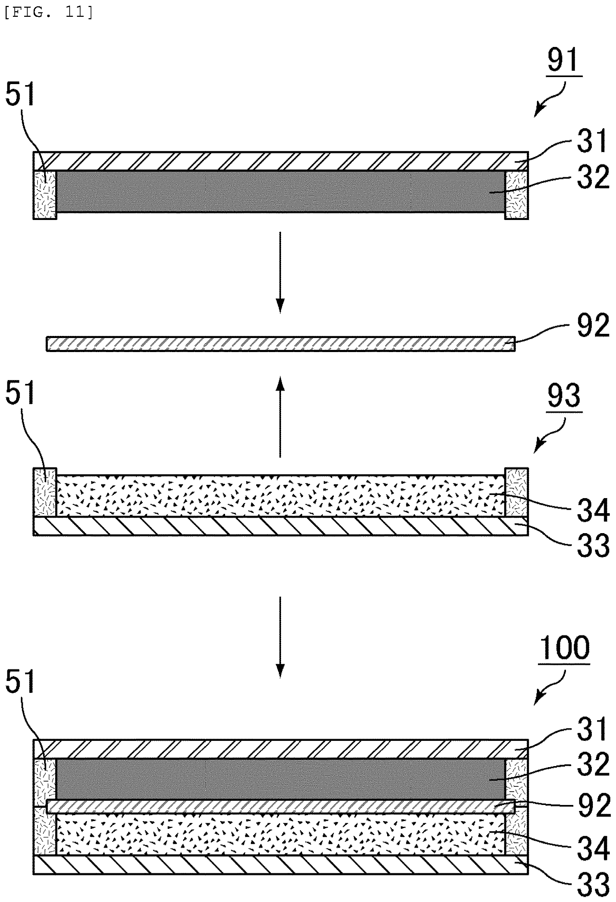

FIG. 11 is a perspective view schematically showing an example of a combination step. As shown in FIG. 11, in the combination step, a positive electrode 91 having a positive electrode current collector 31, a positive electrode active material layer 32 and the sealing material 51, a separator 92, and a negative electrode 93 having a negative electrode current collector 33, a negative electrode active material layer 34 and the sealing material 51 are combined, the sealing material 51 is bonded by heating, and thereby the lithium-ion battery 100 can be obtained.

A method of heating the sealing material 51 is not particularly limited, and for example, an impulse sealer or the like can be used.

In the case of combining the positive electrode 91, the separator 92, and the negative electrode 93, the above-mentioned electrolytic solution may be separately injected.

The separator used in (5) Combination Step above is not particularly limited, and for example, known separators to be used for a lithium-ion battery such as a porous film formed of polyethylene or polypropylene, a laminated film of the above-described porous films (such as a laminated film of a porous polyethylene film and porous polypropylene), a non-woven fabric formed of synthetic fibers (such as polyester fibers and aramid fibers), glass fibers, or the like, and those made by attaching ceramic fine particles such as silica, alumina, or titania to surfaces thereof can be used.

The lithium-ion battery using the electrode for a lithium-ion battery can be manufactured through the above steps.

[Example 3]

<Production of Polymer Compound >

210 parts of toluene was put into a four-necked flask with a stirrer, a thermometer, a reflux condenser, a dropping funnel and a nitrogen gas introduction tube, and the temperature was raised to 75°C. 95 parts of lauric acid methacrylate, 4.6 parts of methacrylic acid, 0.4 parts of 1,6-hexanediol dimethacrylate, 23 parts of toluene, and 0.100 parts of 2,2'-azobis (2,4-dimethylvaleronitrile) and 0.300 parts of 2,2'-azobis (2-methylbutyronitrile) were mixed. The obtained monomeric liquid mixture was continuously added dropwise over 3 hours with the dropping funnel while blowing nitrogen into the flask to carry out radical polymerization. After completion of the dropping, the polymerization was carried out for 4 hours to obtain a coating resin solution having a polymer compound concentration of 30% by weight.

<Example 3-1>

96 parts by weight of $LiNi_{0.8}Co_{0.15}Al_{0.05}O_2$ powder (volume average particle diameter: 4 $\mu$m), which is positive electrode active material particles, was prepared as the electrode active material particles, and was coated with a coating resin in which 2 parts by weight of acetylene black and 2 parts by weight of the polymer compound were mixed to produce the coated positive electrode active material particles.

Next, the coated positive electrode active material particles and the conductive auxiliary agent (acetylene black, graphite) were mixed to prepare a positive electrode active material.

The ratio of each of the materials constituting the positive electrode active material particle composition is as follows:

$LiNi_{0.8}Co_{0.15}Al_{0.05}O_2$ powder: 91.2 parts by weight
Coating resin: 1.9 parts by weight
Acetylene black: 1.9 parts by weight
Graphite: 5.0 parts by weight

A jig for producing pellets with a circular hole with a diameter of 15 mm in a plan view was prepared, and half the total amount (the weight of the positive electrode active material composition in the pellet after production) of the above positive electrode active material composition was put in the hole of the jig. Next, the surface of the positive electrode active material composition in the jig was flattened, and a support (polyester cloth with a fiber diameter of 55 $\mu$m and an aperture ratio of 87%) was placed on the surface of the positive electrode active material composition in the jig.

Next, the other half of the positive electrode active material composition was put in the jig so as to bury the support and vertical press was applied to be formed into a pellet shape, whereby the positive electrode for a lithium-ion battery according to Example 3-1 was produced.

The volume of the support in the total volume of the positive electrode for a lithium-ion battery according to Example 3-1 was 1.5%.

<Example 3-2>

The positive electrode for a lithium-ion battery according to Example 3-2 was produced similar to Example 3-1 except that the positive electrode active material composition was roll-pressed to form into a rectangular parallelepiped shape with length × width × height = 4.5 mm × 5.0 mm × 0.4 mm, instead of forming into a pellet shape.
The volume of the support in the total volume of the positive electrode for a lithium-ion battery according to Example 3-2 was 1.5%.

<Reference Example 3-1>

The positive electrode for a lithium-ion battery according to Reference Example 3-1 was produced similar to Example 3-1 except that the support is not put in the positive electrode active material composition.

<Reference Example 3-2>

The positive electrode for a lithium-ion battery according to Reference Example 3-2 was produced similar to Example 3-2 except that the support is not put in the positive electrode active material composition.

[Three-Point Bending Test]

The maximum stresses of the positive electrodes for a lithium-ion battery according to Examples 3-1 and 3-2 and Reference Examples 3-1 and 3-2 were measured by the measurement methods using the three-point bending tester (manufacturer: Shimadzu Corporation, Model Number: Autograph AGS-X)
The results are shown in Table 3-1.
Measurement method: A disc with a diameter of 50 mm, which has a rectangular hole of 5 mm × 34 mm in the center thereof, was prepared, and the positive electrode for a lithium-ion battery prepared in Examples or Reference Examples was placed in the center. A metal blade was lowered so as to pass through the center of the hole, and the three-point bending strength of a sample was measured. The blade was connected to an autograph, and the lowering speed was 1 mm/min.

[Table 3-1]

|  | Shape | Three-point bending strength (MPa) |
| --- | --- | --- |
| Example 3-1 | Pellet | 2.05 |
| Example 3-2 | Rectangular parallelopiped | 27.95 |
| Reference Example 3-1 | Pellet | 0.26 |
| Reference Example 3-2 | Rectangular parallelopiped | 1.85 |

As shown in Table 3-1, the positive electrode for a lithium-ion battery according to Example 3-1, which is in a pellet shape and has the support inside the positive electrode active material layer, showed the maximum stress that is higher than that of the positive electrode for a lithium-ion battery according to Reference Example 3-1, which is in a pellet shape and has no support inside the positive electrode active material layer.
Further, the positive electrode for a lithium-ion battery according to Example 3-2, which is roll-pressed and has the support inside the positive electrode active material layer, showed the maximum stress that is higher than that of the positive electrode for a lithium-ion battery according to Reference Example 3-2, which is roll-pressed and has no support inside the positive electrode active material layer.
From the above results, it was found that having the support inside the electrode active material layer such as the positive electrode active material layer makes it strong against external stress.
Therefore, it can be said that the electrode active material layer of the non-bound body becomes less likely to be broken during transportation and assembly if the electrode for a lithium-ion battery has the support inside the electrode active material layer.

Industrial Applicability

The coated positive electrode active material particles for a lithium-ion battery of the present invention are particularly useful as coated positive electrode active material particles for a lithium-ion battery for bipolar secondary batteries and lithium ion secondary batteries used for a mobile phone, a personal computer, a hybrid vehicle, and an electric vehicle.

Reference Signs List

1 electrode for a lithium-ion battery
10 coated electrode active material particles
11 electrode active material particles
12 coating layer
20 conductive auxiliary agent
30 the electrode active material layer
30a electrode active material composition
31 positive electrode current collector
32 positive electrode active material layer
33 negative electrode current collector
34 negative electrode active material layer
40, 40a, 40b, 40c, 40d, 40e support
51 sealing material
52 bottom member
53 mask material
60 compressor
71 transport means
72 supply means
73 recovery means
80 camera
91 positive electrode
92 separator
93 negative electrode
100 lithium-ion battery

**Claims**

1. Coated positive electrode active material particles for a lithium-ion battery comprising:

   positive electrode active material particles; and
   a coating layer that contains a polymer coating compound and a conductive additive and at least partially covers a surface of the positive electrode active material particles,
   wherein a coverage of the positive electrode active material particles with the coating layer as determined by X-ray photoelectron spectroscopy is 65% to 96%.

2. The coated positive electrode active material particles for a lithium-ion battery according to claim 1,
   wherein the polymer coating compound includes a polymer of a monomer composition containing an ester compound (a1-11) of (meth)acrylic acid with a C1-C12 monovalent aliphatic alcohol and an anionic monomer (a1-12), and has an acid value of 5 to 200 mgKOH/g.

3. The coated positive electrode active material particles for a lithium-ion battery according to claim 2,
   wherein the anionic monomer (a1-12) is at least one selected from the group consisting of a C3-C9 radically polymerizable unsaturated carboxylic acid, a C2-C8 radically polymerizable unsaturated sulfonic acid, and a C2-C9 radically polymerizable unsaturated phosphonic acid.

4. The coated positive electrode active material particles for a lithium-ion battery according to any of claims 1 to 3,
   wherein the coating layer further contains ceramic particles.

5. The coated positive electrode active material particles for a lithium-ion battery according to claim 4, wherein a weight percent of the ceramic particles is 0.5 to 5.0 wt% based on a weight of the coated positive electrode active material particles.

6. A positive electrode for a lithium-ion battery comprising a positive electrode active material layer containing the coated positive electrode active material particles for a lithium-ion battery according to any of claims 1 to 5.

7. The positive electrode for a lithium-ion battery according to claim 6,

wherein the positive electrode active material layer further contains an electrolyte solution that contains an electrolyte and a solvent, and
a weight percent of a polymer compound contained in the positive electrode for a lithium-ion battery is 1 to 10 wt% based on a weight of the positive electrode for a lithium-ion battery.

8. The positive electrode for a lithium-ion battery according to claim 6 or 7,

wherein the positive electrode active material layer further contains an electrolyte solution that contains an electrolyte and a solvent, and
the positive electrode active material layer consists of an unbound body of the coated positive electrode active material particles for a lithium-ion battery.

9. The positive electrode for a lithium-ion battery according to claim 6,

wherein the positive electrode active material layer further contains a conductive additive,
the positive electrode active material layer is an unbound body, and
the positive electrode active material layer has a support inside thereof that supports a shape of the positive electrode active material layer.

10. The positive electrode for a lithium-ion battery according to claim 9,
wherein the support has a two-dimensional lattice structure or honeycomb structure.

11. The positive electrode for a lithium-ion battery according to claim 9,
wherein the support has a three-dimensional lattice structure or honeycomb structure.

12. The positive electrode for a lithium-ion battery according to any of claims 9 to 11,
wherein a volume percent of the support in the total volume of the positive electrode for a lithium-ion battery is 0.01 to 30%.

13. The positive electrode for a lithium-ion battery according to any of claims 9 to 12,
wherein the support consists of at least one selected from the group consisting of a resin fiber, a carbon fiber, a rubber fiber, a ceramic fiber, and a glass fiber.

14. The positive electrode for a lithium-ion battery according to any of claims 9 to 13,
wherein the support is partially present outside the positive electrode active material layer.

15. A method for producing the coated positive electrode active material particles for a lithium-ion battery according to any of claims 1 to 5, the method comprising:

a mixing step of mixing the positive electrode active material particles, the polymer coating compound, the conductive additive, and a solvent,
wherein an absolute value ($\triangle E$) of a difference between a surface free energy of the positive electrode active material particles and a surface free energy of the solvent is 10 to 30 mN/m.

16. The production method according to claim 15, further comprising a step of removing the solvent after the mixing step.

[FIG. 1]

[FIG. 2A]

[FIG. 2B]

[FIG. 3]

[FIG. 4]

[FIG. 5]

[FIG. 6]

40d

[FIG. 7]

40e

[FIG. 8A]

[FIG. 8B]

[FIG. 9]

[FIG. 10]

[FIG. 11]

**INTERNATIONAL SEARCH REPORT**

| | International application No. |
|---|---|
| | PCT/JP2020/047237 |

A.  CLASSIFICATION OF SUBJECT MATTER
H01M 4/13(2010.01)i; H01M 4/36(2006.01)i; H01M 4/62(2006.01)i
FI: H01M4/36 A; H01M4/36 C; H01M4/13; H01M4/62 Z
According to International Patent Classification (IPC) or to both national classification and IPC

B.  FIELDS SEARCHED

Minimum documentation searched (classification system followed by classification symbols)
H01M4/13; H01M4/36; H01M4/62

| Documentation searched other than minimum documentation to the extent that such documents are included in the fields searched | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 2018-137222 A (SANYO CHEMICAL INDUSTRIES, LTD.) 30 August 2018 (2018-08-30) paragraphs [0072], [0104]–[0116], tables 1-2 | 1-3, 6-8, 15-16 |
| Y | | 4-5, 9-14 |
| X | JP 2019-075326 A (IDEMITSU KOSAN CO., LTD.) 16 May 2019 (2019-05-16) claims, paragraphs [0023]–[0028], [0057], [0065]–[0066], [0082], [0087] | 1, 6-8, 15-16 |
| Y | | 4-5, 9-14 |
| Y | US 2015/0017525 A1 (POSCO CHEMTECH CO., LTD.) 15 January 2015 (2015-01-15) paragraph [0012] | 4-5 |
| Y | JP 2005-340056 A (SANYO ELECTRIC CO., LTD.) 08 December 2005 (2005-12-08) paragraphs [0005], [0007] | 4-5 |
| Y | JP 2019-536194 A (SHENZHEN CAPCHEM TECHNOLOGY CO., LTD.) 12 December 2019 (2019-12-12) paragraph [0004] | 4-5 |

☒  Further documents are listed in the continuation of Box C.        ☒  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 February 2021 (03.02.2021) | 16 February 2021 (16.02.2021) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2020/047237

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2012-256584 A (SUMITOMO ELECTRIC INDUSTRIES, LTD.) 27 December 2012 (2012-12-27) claims, fig. 1 | 9-14 |
| Y | JP 2019-505964 A (NANOTEK INSTRUMENTS, INC.) 28 February 2019 (2019-02-28) claims, fig. 3A-3D | 9-14 |
| Y | US 2009/0169725 A1 (ZHAMU, Aruna) 02 July 2009 (2009-07-02) paragraph [0092] | 9-14 |

Form PCT/ISA/210 (continuation of second sheet) (January 2015)

| International application No. |
| --- |
| PCT/JP2020/047237 |

| Patent Documents referred in the Report | Publication Date | Patent Family | Publication Date |
| --- | --- | --- | --- |
| JP 2018-137222 A | 30 Aug. 2018 | (Family: none) | |
| JP 2019-075326 A | 16 May 2019 | (Family: none) | |
| US 2015/0017525 A1 | 15 Jan. 2015 | KR 10-2015-0009115 A | |
| JP 2005-340056 A | 08 Dec. 2005 | US 2005/0266316 A1 paragraphs [0007]-[0008] | |
| JP 2019-536194 A | 12 Dec. 2019 | US 2019/0305365 A1 paragraph [0004] WO 2018/094819 A1 EP 3547432 A1 CN 108110311 A | |
| JP 2012-256584 A | 27 Dec. 2012 | US 2013/0040196 A1 claims, fig. 1 WO 2012/111738 A1 CN 103380518 A KR 10-2014-0001922 A | |
| JP 2019-505964 A | 28 Feb. 2019 | US 2017/0207488 A1 claims, fig. 3A-3D US 2017/0207484 A1 WO 2017/123544 A1 KR 10-2018-0101474 A CN 108701870 A | |
| US 2009/0169725 A1 | 02 Jul. 2009 | US 2009/0169996 A1 | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012150905 A
- JP 2017160294 A
- JP 2019096478 A
- JP 2015005116 A
- JP 2017147222 A
- JP 2017054703 A
- JP H10255805 A

**Non-patent literature cited in the description**

- *Journal of Applied Polymer Science,* August 1969, vol. 13 (8), 1741-1747
- *Surface,* 2005, vol. 4, 313-318